# EUROPEAN PATENT APPLICATION

(11) **EP 2 048 189 A1**
(43) Date of publication of application: **15.04.2009**
(21) Application number: 07791670.8
(22) Date of filing: 31.07.2007
(51) Int. Cl.: C08K 9/06, C01F 7/02, C08L 69/00, C09C 1/40, C09C 3/12

(54) **SURFACE-COATED ALUMINUM OXIDE NANOPARTICLE AND RESIN COMPOSITION THEREOF**

(30) Priority: 03.08.2006 JP 2006212261
(71) Applicant: Nissan Motor Co., Ltd., Kanagawa 221-0023 (JP)
(72) Inventor: FUJITA, Naoko, Yokohama-shi Kanagawa 227-8502 (JP); KAWA, Manabu, Yokohama-shi Kanagawa 227-8502 (JP); SOMA, Minoru, Yokohama-shi Kanagawa 227-8502 (JP); ODA, Takashi c/oNISSAN MOTOR CO. LTD., Kanagawa 243-0123 (JP); UNNO, Haruo c/o NISSAN MOTOR CO. LTD., Kanagawa 243-0123 (JP); MOROHOSHI, Katsumi c/o NISSAN MOTO CO. LTD., Kanagawa 243-0123 (JP); ITO, Tomohiro c/oNISSAN MOTOR CO. LTD., Kanagawa 243-0123 (JP); KAI, Yasuaki c/o NISSAN MOTOR CO. LTD., Kanagawa 243-0123 (JP); MURAMATSU, Hironobu c/o NISSAN MOTOR CO. LTD., Kanagawa 243-0123 (JP)
(74) Representative: Schaeberle, Steffen
(86) International application number: PCT/JP2007/064985
(87) International publication number: WO 2008/016048

(57) **Abstract**

Surface-coated aluminum oxide nanoparticles capable of being uniformly blended into polycarbonate resin in a good dispersed state while maintaining a molecular weight of the polycarbonate resin at a specific level or more. Surfaces of the surface-coated aluminum oxide nanoparticles are coated with a dispersant and a silylation reagent. In a case where a monochromated Al-Ka ray is irradiated onto a sample surface by using an X-ray photoelectron spectroscope, when a surface element composition is calculated from an obtained photoelectron peak area, contents (atm%) of nitrogen atoms, thiol-derived sulfur atoms, and halogen atoms in the surface-coated aluminum oxide nanoparticles are individually 2 or less, and when the surface element composition is calculated from obtained photoelectron peak areas of Al2p and Si2s, a concentration (mol%) of silicon atoms with respect to aluminum atoms is 0.05 to 30.

## Description

### TECHNICAL FIELD

The present invention relates to surface-coated aluminum oxide nanoparticles and a production method thereof, to a resin composition containing the surface-coated aluminum oxide nanoparticles, and to an organic sol containing the surface-coated aluminum oxide nanoparticles and a production method thereof. More specifically, the present invention relates to surface-coated aluminum oxide nanoparticles capable of providing a resin composition excellent in transparency and mechanical property particularly in the case of being used as filler of polycarbonate resin and a production method of the surface-coated aluminum oxide nanoparticles, to a polycarbonate resin composition containing the surface-coated aluminum oxide nanoparticles, and to an organic sol containing the surface-coated aluminum oxide nanoparticles and a production method thereof.
Moreover, the present invention relates to a molded body of the polycarbonate resin composition containing the surface-coated aluminum oxide nanoparticles.

### BACKGROUND ART

Heretofore, a method of adding filler to resin has been attempted as a method of enhancing mechanical strength, dimensional stability, thermal resistance and the like of resin.

However, a transparent material cannot be obtained by glass fiber widely used as a reinforcement of the resin owing to problems on a refractive index difference between the glass fiber and the resin and on a size of the glass fiber. Accordingly, it has been difficult to use the glass fiber for a material such as an automotive window material, for which transparency is required.

In order to solve this problem, filler is desired, which has a small refractive index difference with the resin, is finer, and is uniformly dispersible into the resin.
Aluminum oxide has a small refractive index difference with the polycarbonate resin, and accordingly, it is expected that a resin composition excellent in transparency can be obtained thereby.

For a technology for using the aluminum oxide as the filler for the resin, a variety of proposals have been heretofore made.
For example, in Patent Citation 1, needle-like boehmite and needle-like alumina, in both of which a major axis length is 1 to 10 µm and an aspect ratio is 40 to 70, are molten and mixed with the resin by a mixer, whereby a resin composition is produced. However, a size of such needle-like particles for use is considerably larger in comparison with the visible light wavelength, and moreover, dispersibility of the particles concerned is sufficient. Accordingly, the resin composition has not obtained sufficient transparency yet.

In Patent Citations 2 and 3, resin compositions using needle-like nanoparticles of the aluminum oxide are disclosed. Among them, in Patent Citation 2, it is reported that the resin composition of aluminum oxide particles as the nanoparticles and polycarbonate is highly transparent and excellent in mechanical strength. However, in accordance with the examination of the inventors of the present invention, in this resin composition, an added amount of the aluminum oxide particles is small, and dispersibility thereof is also insufficient. Accordingly, it has been still difficult to say that the resin composition is satisfactory as the resin composition to be used as the automotive window material, for which a low coefficient of linear thermal expansion is required.

In Patent Citation 3, it is disclosed that the needle-like boehmite particles are dispersed into the resin without performing surface treatment therefor. However, in accordance with the examination of the inventors of the present invention, in order to disperse the particles which are not substantially subjected to the surface treatment into a polymer without forming aggregates, the resin is limited to resin having strong polar groups in polymer chains (for example, polyamide, thermoplastic polyurethane and the like), and in the case of the polycarbonate resin of which polarity is relatively small, aggregation of the particles is inevitable. Moreover, it has turned out that a decrease of a molecular weight of the polycarbonate resin is caused owing to a catalytic function of the boehmite itself, whereby the mechanical property of the obtained resin composition is decreased to a large extent.

Incidentally, as a method of modifying and dispersing the aluminum oxide into an organic solvent, a method of treating the aluminum oxide with sulfonic acid is known (for example, Patent Citation 4). However, as a result of an assiduous examination by the inventors of the present invention, it has turned out that, when the boehmite subjected to such sulfonic acid treatment is mixed with the polycarbonate resin, the decrease of the molecular weight of the polycarbonate resin is also caused.

Moreover, a method of enhancing the dispersibility of the aluminum oxide by treating surfaces thereof with a silane coupling agent is described in Patent Citation 5. However, in the case of performing the treatment with such a trifunctional silane coupling agent as disclosed herein, the aggregation of the boehmite in the resin composition is inevitable, and as a result, the transparency of the resin composition is damaged. Moreover, it has also turned out that, in the case where the boehmite treated with a silane coupling agent having basic or acidic functional groups is blended with the polycarbonate resin, the molecular weight of the polycarbonate resin is decreased, and the mechanical property of the obtained resin composition is damaged.

As described above, heretofore, in the resin composition containing the aluminum oxide nanoparticles and the polycarbonate resin, the various examinations have been made in order to improve the characteristics thereof. However, under the present circumstances, a resin composition that combines high transparency, dimensional stability and excellent mechanical characteristics has not been provided yet.
Patent Citation 1: Japanese Patent Unexamined Publication No. 2003-54941
Patent Citation 2: Japanese Patent Unexamined Publication No. 2006-62905
Patent Citation 3: Japanese Patent Translation Publication No. 2005-528474
Patent Citation 4: Japanese Patent Translation Publication No. 2003-517418
Patent Citation 5: Japanese Patent Unexamined Publication No. 2004-149687

### DISCLOSURE OF INVENTION

In order to realize the polycarbonate resin composition that combines the high transparency, the dimensional stability and the excellent mechanical characteristics, it is a main object of the present invention to provide surface-coated aluminum oxide nanoparticles capable of being uniformly blended into the polycarbonate resin in a good dispersed state while maintaining the molecular weight of the polycarbonate resin at a specific level or more, and to provide a production method of the surface-coated aluminum oxide nanoparticles.
It is another object of the present invention to provide a resin composition and organic sol, which contain the surface-coated aluminum oxide nanoparticles as described above, and to provide a production method of the organic sol.

Surface-coated aluminum oxide nanoparticles of a first aspect are surface-coated aluminum oxide nanoparticles of which surfaces are coated with a dispersant and a silylation reagent, characterized in that contents (atm%) of nitrogen atoms, thiol-derived sulfur atoms, and halogen atoms in the surface-coated aluminum oxide nanoparticles are individually 2 or less when a monochromated Al-Kα ray is irradiated onto a sample surface by using an X-ray photoelectron spectroscope, and a surface element composition is calculated from an obtained photoelectron peak area, and that a concentration (mol%) of silicon atoms with respect to aluminum atoms is 0.05 to 30 when the monochromated Al-Ka ray is irradiated onto the sample surface by using the X-ray photoelectron spectroscope, and the surface element composition is calculated from obtained photoelectron peak areas of Al2p and Si2s.

Organic sol of a second aspect is characterized by including the surface-coated aluminum oxide nanoparticles of the first aspect.

A resin composition of a third aspect is characterized by including the surface-coated aluminum oxide nanoparticles of the first aspect, and polycarbonate resin.

A resin composition of a fourth aspect is a resin composition including surface-coated aluminum oxide nanoparticles of which surfaces are coated with a dispersant and a silylation reagent, and polycarbonate resin, characterized in that haze measured by a method of JIS K 7105 is 40% or less.

A production method of surface-coated aluminum oxide nanoparticles according to a fifth aspect is a production method of surface-coated aluminum oxide nanoparticles, which includes the step of treating aluminum oxide nanoparticles with a silylation reagent, characterized in that the silylation reagent is a monofunctional silylation reagent and/or a bifunctional silylation reagent, and that atomic ratios of nitrogen atoms, sulfur atoms and halogen atoms with respect to silicon atoms in the silylation reagent are individually 0.05 or less.

A production method of organic sol according to a sixth aspect is a production method of organic sol, which includes the step of treating aluminum oxide nanoparticles with a silylation reagent, characterized in that the silylation reagent is a monofunctional silylation reagent and/or a bifunctional silylation reagent, and that atomic ratios of nitrogen atoms, sulfur atoms and halogen atoms with respect to silicon atoms in the silylation reagent are individually 0.05 or less.

A molded body of a seventh aspect is characterized in that the resin composition of the third aspect is used.

A molded body of an eighth aspect is characterized in that the resin composition of the fourth aspect is used.

A molded body of a ninth aspect is a molded body of a polycarbonate resin composition containing aluminum oxide nanoparticles, characterized in that haze is 5% or less, and a modulus of elasticity in tension is 5 GPa or more.

A molded body of a tenth aspect is a molded body of a polycarbonate resin composition containing aluminum oxide nanoparticles, characterized in that haze is 5% or less, and a coefficient of linear thermal expansion is 45 ppm/K or less.

### BEST MODE FOR CARRYING OUT THE INVENTION

In surface-coated aluminum oxide nanoparticles provided by the present invention, degradability of polycarbonate resin is deactivated. Accordingly, by allowing the polycarbonate resin to contain, as filler, the surface-coated aluminum oxide nanoparticles to thereby obtain a resin composition, an effect of adding the filler, that is, an effect of enhancing mechanical strength, dimensional stability, thermal stability and the like of the resin composition can be fully obtained in a state where characteristics of the polycarbonate resin are made use. Moreover, by using particles with an appropriate size, it is also possible to obtain a resin composition that maintains transparency.
Hence, in accordance with the present invention, there can be provided a resin composition that is excellent in mechanical strength, dimensional stability, thermal stability and the like, and in addition, is highly transparent, and can be provided a molded body of the resin composition.

A description will be made below in detail of an embodiment of the present invention. The description of constituents, which will be made below, is an example (representative example) of embodiments of the present invention, and the present invention is not specified by contents of the constituents unless exceeds the gist of the present invention.

### [Surface-coated aluminum oxide nanoparticles]

The surface-coated aluminum oxide nanoparticles of the present invention are surface-coated aluminum oxide nanoparticles of which surfaces are coated with a dispersant and silylation reagent, characterized in that, when a monochromated Al-Kα ray is irradiated onto a sample surface by using an X-ray photoelectron spectroscope (abbreviation: XPS or ESCA), and a surface element composition is calculated from an obtained photoelectron peak area, contents (atm%) of nitrogen atoms, thiol group-derived sulfur atoms and halogen atoms are individually 2 or less. Further, when the monochromated Al-Kα ray is irradiated onto the sample surface by using the X-ray photoelectron spectroscope (abbreviation: XPS or ESCA), and the surface element composition is calculated from obtained areas of Al2p and Si2s, a concentration (mol%) of silicon atoms with respect to aluminum atoms is 0.05 to 30.

### {Aluminum oxide nanoparticles}

Aluminum oxide composing the aluminum oxide nanoparticles of the present invention is represented by the following formula (3), and is usually made of one or two or more mixtures.

Al₂O₃·nH₂O (3)

Specifically, one in which n is equal to 0 in the above-described formula (3) is aluminum oxide, and has types such as δ, γ, θ, α types. One in which n is equal to 1 is boehmite. One in which n exceeds 1 and is less than 3 is a mixture of the boehmite and alumina hydrate, and is generally referred to as pseudo-boehmite. One in which n is equal to 3 is aluminum hydroxide. One in which n exceeds 3 is aluminum hydrate.

Among them, the boehmite and the pseudo-boehmite are preferable from viewpoints of availability, maintaining dispersibility of the particles, and a refractive index.

The aluminum oxide nanoparticles for use in the present invention may have any shape of a fiber shape, a spindle shape, a stick shape, a needle shape, a cylinder shape and a column shape.
With regard to a particle size of the aluminum oxide nanoparticles, a minor axis length is 1 to 10 nm, a lower limit of a major axis length is usually 20 nm or more, and an upper limit there of is usually 1000 nm or less, preferably 700 nm or less, more preferably 500 nm or less, and particularly preferably 400 nm or less. A lower limit of an aspect ratio (length-to-width dimensional ratio) is preferably 5 or more, and more preferably 10 or more, and an upper limit thereof is preferably 1000 or less, more preferably 700 or less, still more preferably 500 or less, and particularly preferably 400 or less.
In the case of attempting to obtain the highly transparent resin composition while blending the aluminum oxide nanoparticles thereinto, the minor axis length in the particle size is particularly preferably 6 nm or less, and the major axis length is particularly preferably 50 to 700 nm.

The aluminum oxide nanoparticles as described above can be produced, for example, by the methods disclosed in Patent Citations 1 and 2 listed above.

### {Contents: atm% of nitrogen atoms, thiol group-derived sulfur atoms and halogen atoms}

Contents (atm%) of the nitrogen atoms, the thiol group-derived sulfur atoms and the halogen atoms (individual fluorine atoms, chlorine atoms, bromine atoms and iodine atoms), which are obtained by performing X-ray photoelectron spectrometry for the surface-coated aluminum oxide nanoparticles of the present invention under the above-described measurement conditions, are individually 2 or less, preferably 1 or less, and more preferably 0.5 or less.

Since the nitrogen exhibits basic property, in the case where the nitrogen is mixed with the polycarbonate resin when the content of the nitrogen atoms is larger than the above-described upper limit, there is such a problem that the molecular weight of the resin is greatly decreased to thereby decrease the mechanical strength of the polycarbonate resin composition.

Since the thiol exhibits acidulous property, when the content of the thiol group-derived sulfur atoms is larger than the above-described upper limit, there is such a problem that the obtained resin composition is not suitable for commercial articles such as automotive windows since the molecular weight of the polycarbonate resin is decreased in a similar way to the above, and such a resin composition containing the thiol group-derived sulfur atoms has an offensive odor.

When the content of the halogen atoms is larger than the above-described upper limit, owing to acidic property derived from the halogen, there are such problems that the molecular weight of the polycarbonate resin is decreased in a similar way to the above, and corrosion of metals to be used in the periphery of the resin composition is caused.

Note that the contents of the respective atoms which are the nitrogen atoms, the thiol group-derived sulfur atoms and the halogen atoms, the contents being measured by the X-ray photoelectron spectrometry according to the present invention, are obtained in such a manner that the monochromated Al-Kα ray is irradiated onto the sample surface, and the surface element composition is calculated from photoelectron peak areas thus obtained. Moreover, the concentration of the silicon atoms with respect to the aluminum atoms, which will be described later, is also obtained by the X-ray photoelectron spectrometry in such a manner that the monochromated Al-Kα ray is irradiated onto the sample surface, and the surface element composition is calculated from photoelectron peak areas of Al2p and Si2s. For example, measurement conditions are specifically as follows.
<Measurement condition>
Measuring apparatus: Quantum2000 made by Ulvac-PHI, Incorporated
X-ray source: monochromated Al-Kα ray
Output: 16kV - 30W
X-ray generation area: 150 µmø
Charge neutralization: using electron gun of 2µA, and ion gun
Spectroscopy: pass energy
At time of measuring wide spectrum = 187.85eV
At time of measuring narrow spectra (N1s, F1s, Si2p, Cl2p, Br3p, I3d) = 58.7eV
At time of measuring narrow spectra (Al2p, S2p) = 29.35eV
Measured region: 300 µm square
Take-off angle: 45°
Reference (correction method) of energy axis: correct energy axis by taking Al2p peak of boehmite as 74.0eV

### {Concentration: mol% of silicon atoms with respect to aluminum atoms}

The concentration (mol%) of the silicon atoms with respect to the aluminum atoms (hereinafter, sometimes described as "Si/Al ratio (mol%)" in the surface-coated aluminum oxide nanoparticles of the present invention is 0.05 to 30, preferably 0.15 to 25, more preferably 0.2 to 25, and particularly preferably 0.3 to 23.

When the Si/Al ratio (mol%) is smaller than the above-described lower limit, there is such a problem that the function that the surface-coated aluminum oxide nanoparticles degrade the polycarbonate resin cannot be suppressed. Meanwhile, when the Si/Al ratio (mol%) is larger than the above-described upper limit, there are such problems that the dimensional stability and mechanical property of the obtained resin composition are decreased since the aspect ratio of the surface-coated aluminum oxide nanoparticles is damaged, and that the resin composition does not become transparent since a refractive index difference between the surface-coated aluminum oxide nanoparticles and the polycarbonate resin is increased.

### [Production Method of Surface-coated aluminum oxide nanoparticles]

The surface-coated aluminum oxide nanoparticles of the present invention can be produced by a production method of the surface-coated aluminum oxide nanoparticles according to the present invention, which includes the step of treating the aluminum oxide nanoparticles as described above, for example, with a silylation reagent as a monofunctional silylation reagent and/or a bifunctional silylation reagent. Atomic ratios of nitrogen atoms, sulfur atoms and halogen atoms with respect to silicon atoms in the silylation reagent are individually 0.05 or less.
The production method of the surface-coated aluminum oxide nanoparticles according to the present invention may further include the step of treating the aluminum oxide nanoparticles with a dispersant.

As will be described later, a sulfonic acid dispersant and a phosphoric acid dispersant are adsorbed onto the surfaces of the aluminum oxide nanoparticles, whereby the aluminum oxide nanoparticles can be dispersed, and surface treatment can be performed. However, in accordance with the examination of the inventors of the present invention, this surface treatment method does not have a satisfactory function though can decrease catalytic activity of the aluminum oxide nanoparticles for performing hydrolysis for the polycarbonate resin. Specifically, such dispersants are merely chemically adsorbed onto the surfaces of the aluminum oxide nanoparticles, and accordingly, a liberated dispersant component exists. In addition, desorption of the above-described dispersant occurs at the time of heating when the resin composition is molten and molded. Therefore, such liberated dispersants serve as catalysts, and promote the hydrolysis of the polycarbonate, and a site from which the dispersants are desorbed returns to the original untreated aluminum oxide nanoparticles. As a result, the aluminum oxide nanoparticles also serve as the catalysts, and promote the hydrolysis of the polycarbonate resin.
Moreover, also in the case of not using the dispersants, acid points and base points, which are owned by the aluminum oxide nanoparticles themselves, serve as the catalysts.
Therefore, in the present invention, such active sites of the aluminum oxide nanoparticles are deactivated by the silylation reagent.

### {Silylation reagent}

In the present invention, the silylation reagent for use in the surface treatment of the aluminum oxide nanoparticles is the monofunctional and/or bifunctional silylation reagent. Ratios of the nitrogen atoms, the sulfur atoms and the halogen atoms (hereinafter, these are sometimes described as "Z/Si ratios") with respect to the silicon atoms in the silylation reagent are 0.05 or less individually, preferably 0.01 or less individually, and more preferably 0.005 or less individually.

When the Z/Si ratios of the silylation reagent are too large, there is such a problem that the polycarbonate resin is hydrolytically degraded to thereby damage the mechanical property of the resin composition because of the reasons individually mentioned above as the descriptions of the upper limits of the content of the nitrogen in the surface-coated aluminum oxide nanoparticles of the present invention, the content of the thiol group-derived sulfur atoms therein, and the content of the halogen atoms.

Moreover, in the case where only a trifunctional or more than trifunctional silylation reagent is used, and the monofunctional and/or bifunctional silylation reagent is not used, the silylation reagent crosslinks the aluminum oxide nanoparticles to thereby aggregate the aluminum oxide nanoparticles. In such a way, there are such problems that the aspect ratio originally owned by the aluminum oxide nanoparticles is lost, the dispersibility of the aluminum oxide nanoparticles is deteriorated, and in the obtained resin composition, satisfactory dimensional stability, transparency and mechanical strength cannot be obtained. Accordingly, this described case is not preferable.
However, the trifunctional or more than trifunctional silylation reagent can be appropriately used in conjunction with the above-described monofunctional and/or bifunctional silylation reagent as long as the dispersibility of the aluminum oxide nanoparticles in sol and/or of the resin composition and the mechanical property of the resin composition are not damaged.

In particular, it is preferable that the silylation reagent for use in the present invention be a silylation reagent represented by the following general formula (1) and/or a silylation reagent represented by the following general formula (2). Particularly, it is preferable that the silylation reagent represented by the following general formula (1).

R¹R²R³SiX (1)

R⁴R⁵SiX¹X² (2)

In the formulas (1) and (2), R¹ to R⁵ represent alkyl groups or aryl groups independently of one another. X, X¹ and X² represent hydrogen atoms, hydrolytic substituents or hydroxyl groups independently of one another.

In the above-described formulas (1) and (2), as R¹ to R⁵, specifically mentioned are: aliphatic alkyl groups with a carbon number of 1 to 20, such as methyl groups, ethyl groups, propyl groups, isopropyl groups and allyl groups; alicyclic alkyl groups with a carbon number of 4 to 12, such as cyclohexyl groups, bicycloheptyl groups and adamantyl groups; and aryl groups such as phenyl groups, benzyl groups, toluic groups and naphtyl groups. Moreover, the substituent on Si may become annular like silacyclohexane.

Moreover, it is preferable that the number of functional groups in the silylation reagent be two or less in one molecule. In addition, while X, X₁ and X₂ are the hydrogen atoms, the hydrolytic substituents or the hydroxyl groups independently of one another in the above-described formulas (1) and (2), here, as the hydrolytic substituents, preferable are alkoxy groups, each of which has a carbon number of 1 to 4, such as methoxy groups, ethoxy groups and isopropoxy groups, and acetoxy groups. These hydrolytic substituents is hydrolyzed to become the hydroxyl groups, and then the silylation reagents react with hydroxyl groups of the aluminum oxide nanoparticles. Hence, X, X¹, and X² may be the hydroxyl groups.

Note that, when N, SH and the halogen are contained in the silylation reagent, in the case where the silylation reagent is mixed with the polycarbonate resin, these exhibit the acidic property or the basic property, serve as the catalysts for the hydrolysis of the polycarbonate resin, and decrease the molecular weight of the polycarbonate resin. Accordingly, it is preferable that these elements not be contained in the substituents in the silylation reagent. In the present invention, as described above, the Z/Si ratios as the ratios of these elements in the silylation reagent are 0.05 or less, preferably 0.01 or less, and more preferably 0.005 or less. It is particularly preferable that these elements not be substantially contained in the silylation reagent.

### {Specific examples of silylation reagent}

As specific compounds of the above-described silylation reagent, for example, ones as below are mentioned.
<Monofunctional hydrosilane>
trimethylsilane, triethylsilane
dimethylphenylsilane, ethylmethylphenylsilane, diethylphenylsilane, methyldiphenylsilane, triphenylsilane
<Bifunctional hydrosilane>
dimethylsilane, diethylsilane, ethylmethylsilane, diisopropylsilane methylphenylsilane, ethylphenylsilane, methylisopropylsilane diphenylsilane
<Monofunctional alkoxysilane>
methoxytrimethylsilane, ethoxytrimethylsilane, triethylmethoxysilane, triethylethoxysilane, methoxytriphenylsilane, ethoxytriphenylsilane
ethylmethoxydimethylsilane, ethoxyethyldimethylsilane,
methoxydimethylphenylsilane, ethoxydimethylphenylsilane
methoxymethyldiphenylsilane, ethoxymethyldiphenylsilane
<Monofunctional acetoxysilane>
acetoxytrimethylsilane, acetoxytriethylsilane
acetoxydimethylphenylsilane
<Bifunctional alkoxysilane>
dimethoxydimethylsilane, diethyldimethoxysilane, ethylmethyldimethoxysilane, diethoxydimethylsilane, diethoxydiethylsilane, diethoxyethylmethylsilane, dihexyldimethoxysilane, diethoxydihexylsilane
dimethoxymethylphenylsilane, diethoxymethylphenylsilane
dimethoxydiphenylsilane, diethoxydiphenylsilane
octadecyldimethoxymethylsilane, octadecyldiethoxymethylsilane
diallyldimethoxysilane, diallyldiethoxysilane,
butenyldimethoxymethylsilane, butenyldiethoxymethylsilane,
<Bifunctional acetoxysilane>
diacetoxydimethylsilane, diethylacetoxysilane
diacetoxymethylphenylsilane
acetoxydiphenylsilane
<Silane compound having two different types of functional groups>
methoxydimethylsilane, ethoxydimethylsilane, ethylmethoxymethylsilane

As the trifunctional or more than trifunctional silylation reagent appropriately usable in conjunction with the above-described monofunctional and/or bifunctional silylation reagent, for example, ones as below are mentioned.
<Trifunctional alkoxysilane>
trimethoxymethylsilane, ethyltrimethoxysilane, trimethoxyphenylsilane, 3-glycidyloxypropyltrimethoxysilane,
triethoxymethylsilane, triethoxyethylsilane, triethoxyphenylsilane, 3-glycidyloxypropyltriethoxysilane,
<Trifunctional acetoxysilane>
triacetoxymethylsilane, triacetoxyphenylsilane,
<Tetrafunctional alkoxysilane>
tetramethoxysilane, tetraethoxysilane
<Tetrafunctional acetoxysilane>
tetraacetoxysilane
<Multifunctional alkoxysilane>
oligomer of alkoxysilane (for example, "MS-51" in "MKC silicate" (registered trademark) made by Mitsubishi Chemical Corporation, such as oligomer of tetramethoxysilane)

One type of these silylation reagents may be used singly, or two or more thereof may be used in conjunction with each other.
Among them, methoxytrimethylsilane, acetoxytrimethylsilane, dimethoxydimethylsilane, dimethoxymethylphenylsilane and dimethoxydiphenylsilane are preferable from viewpoints of reactivity thereof with the aluminum oxide nanoparticles, the dispersibility of the obtained particles, a suppression effect of resin degradability and the mechanical property of the resin composition, and methoxytrimethylsilane, acetoxytrimethylsilane, dimethoxymethylphenylsilane are more preferable.

### {Method of surface treatment with silylation reagent}

A form of the aluminum oxide nanoparticles served for the surface treatment with the silylation reagent may be either powder or sol (dispersion liquid).
In this case, it is preferable that a solvent of the sol be an organic solvent in terms of compatibility between the solvent of the sol and the silylation reagent. Alternatively, it is preferable that the surface treatment with the silylation reagent be performed without using any solvent. The surface treatment is implemented by performing heating according to needs.

In the case where a large amount of moisture is contained in a reactor, sometimes, the silylation reagent does not react with the surfaces of the aluminum oxide nanoparticles but causes a self-condensation reaction, and the surface coating of the aluminum oxide nanoparticles is not performed sufficiently. Accordingly, in the surface treatment for the aluminum oxide nanoparticles by the silylation reagent, it is preferable to reduce the amount of moisture in a reaction system.

In the case where the aluminum oxide nanoparticles are subjected to the silylation treatment not in the form of the sol, which uses the solvent, but in the form of the powder, it is also possible to use a dry agitator such as a Henschel mixer and a gas-phase flow reactor. In the case of using the aluminum oxide nanoparticles in the form of the powder, commercially available ones can be used, or alternatively, there can be used ones formed into powder with a desired crystal form in such a manner that the aluminum oxide nanoparticles generated by hydrothermal synthesis are dried and are thereafter fired under desired firing conditions, or formed thereinto by a method such as a freeze-dry method, spray drying and filtration. In this case, the aluminum oxide nanoparticles may be powdered after dispersants of organic sulfonic acid/organic phosphoric acid to be described later and derivatives of these are allowed to act thereon. In the case of powdering the aluminum oxide nanoparticles without adding thereto the dispersants of the organic sulfonic acid/organic phosphoric acid and the derivatives of these, it is preferable to add these dispersants to the aluminum oxide nanoparticles after the silylation treatment.

A method of treating the aluminum oxide nanoparticles as the powder by a gas phase is preferable as an industrial method in terms of production cost. However, the dispersibility of the particles is sometimes somewhat inferior to that of liquid-phase treatment. In such a case, the dispersibility of the particles can be improved more by using an apparatus such as an ultrasonic dispersion machine, which redisperses the aggregated particles.
It is preferable that the aluminum oxide nanoparticles have the form of the sol and be treated in the liquid phase in the sense that more uniform treatment can be performed for the aluminum oxide nanoparticles and the dispersibility of the aluminum oxide nanoparticles is to be thereby maintained.

### {Preparation of sol of aluminum oxide nanoparticles}

In the case of using the aluminum oxide nanoparticles in the form of the sol, for the preparation of the sol, a method of dispersing the aluminum oxide nanoparticles as the powder into a desired solvent is adoptable. Further, a method that the aluminum oxide nanoparticles obtained by aqueous sol are added with a solvent that boils together with water and water is substituted with the solvent by azeotropic dehydration, or the solvent is substituted with a desired solvent by ultrafiltration is adoptable. Furthermore, a method of dispersing the following aluminum oxide powder into desired sol, and the like is adoptable. The aluminum oxide powder to be thus dispersed is formed into the powder with the desired crystal form by the method such as the freeze-dry method, the spray drying and the filtration. In this case, if the dispersants of the organic sulfonic acid/organic phosphoric acid to be described later and the derivatives of these are contained in advance in the solvent or the aluminum oxide nanoparticles, then it becomes possible to prevent the aggregation of the aluminum oxide nanoparticles.
As the solvent for forming the sol of the aluminum oxide nanoparticles, a surface treatment solvent to be described later can be used.

### {Surface treatment reaction condition}

### <Reaction temperature>

No matter whether the aluminum oxide nanoparticles have the liquid phase or the gas phase, a heating temperature in the case of treating the aluminum oxide nanoparticles with the silylation reagent is usually selected from an approximate range of 0 to 400°C.
In the treatment in the liquid phase, in the case of treating the aluminum oxide nanoparticles under the atmospheric pressure, an upper limit of such a reaction temperature is usually determined by the type of the silylation reagent and a boiling point of the selected solvent. However, it is preferable that the reaction temperature be within an approximate range of 15 to 200°C from viewpoints of reactivity of the silylation reagent with the surfaces of the aluminum oxide nanoparticles and generation suppression of a self-condensate of the silylation reagent.
In the treatment of the gas phase, a temperature within the above-described range is selected. However, the temperature is selected in consideration for thermal stability of the silylation reagent, the reactivity of the silylation reagent with the aluminum oxide nanoparticles, the crystal form of the aluminum oxide nanoparticles, and an aggregation degree of the particles. In general, the temperature is selected in the range of 15 to 300°C, and preferably in a range of 20 to 200°C.
If the reaction temperature is lower than the above-described lower limit, then a reaction rate is significantly decreased. If the reaction temperature is higher than the above-described upper limit, then a self-condensation reaction of the silylation reagent mainly advances, and thermal decomposition of the silylation reagent and the aggregation among the aluminum oxide nanoparticles advance. As described above, both of such cases are not preferable.

### <Reaction time>

A reaction time is not particularly limited. However, the aluminum oxide nanoparticles and the silylation reagent just need to be reacted with each other usually from one minute to 40 hours.
In the case of performing the reaction, if the reaction is performed while removing a byproduct derived from the silylation reagent, the reaction between the silylation reagent and the surfaces of the aluminum oxide nanoparticles becomes likely to advance, and this is preferable.
Moreover, it is also advantageous that an aging period from several hours to one week is ensured after such a silylation reaction in terms of advancing the reaction between the silylation reagent and the surfaces of the aluminum oxide nanoparticles. In this case, it is important to adjust the temperature and the time to an extent at which the dispersibility of the aluminum oxide nanoparticles is not damaged.

### {Surface treatment solvent}

In the case of performing the surface treatment in the liquid phase, the surface treatment may be performed either without using any solvent or by using the solvent. However, it is preferable that such a reaction liquid that does not aggregate the aluminum oxide nanoparticles in the liquid phase be used. Also in the gas phase, the silylation reagent does not have to be diluted in the solvent. However, from a point of handling and the like in the case of adjusting the concentration of the silylation reagent and using a silylation reagent with a high boiling point, the silylation reagent may be appropriately diluted by the solvent and may be brought into contact with the aluminum oxide nanoparticles.
In any of the cases, in the case of using the solvent, any solvent may be used as long as the silylation reaction of the aluminum oxide nanoparticles is not inhibited and the aggregation of the aluminum oxide nanoparticles is not brought about.
Moreover, from a viewpoint of the cost, it is preferable that the solvent be a solvent that is not necessary to be exchanged in the case of being mixed with the polycarbonate resin in terms of the usage purpose thereof. Hence, in the case of dissolving the polycarbonate resin in a subsequent step, it is preferable that the above-described solvent be the same as a solvent in this subsequent step, and moreover, a solvent having a dissolution capacity for the polycarbonate resin is preferable.

As the surface treatment solvent, the following solvents are mentioned, for example, an aliphatic hydrocarbon solvent such as hexane; an aromatic hydrocarbon solvent such as toluene and tetralin; an alcohol solvent such as methanol, ethanol, *n*-propanol, *i*-propanol, *n*-butanol and ethylene glycol; an ester solvent such as butyl acetate; an ether solvent such as ethers of tetrahydrofuran, 1,4-dioxane, hexamethyldisiloxane and ethylene glycol; a ketone solvent such as methyl ethyl ketone and cyclohexanone; an acetal solvent such as 1,3-dioxolane; an aprotic solvent such as N-dimethylformamide and dimethylsulfoxide; a halogen solvent such as 1,1,2,2-tetrachloroethane; and the like. It is preferable that the surface treatment solvent be a solvent that does not greatly inhibit the silylation reaction and a solvent that does not inhibit a dispersed state of the aluminum oxide nanoparticles.

### {Usage amount of silylation reagent}

A usage amount of the above-described silylation reagent is not particularly limited, and just needs to be an amount sufficient for fully coating the aluminum oxide nanoparticles and suppressing the degradation of the polycarbonate resin. For this purpose, though depending on a structure of the silylation reagent and the reactivity thereof with the aluminum oxide nanoparticles, if the usage amount of the silylation reagent is 0.001 to 50 parts by weight with respect to 1 part by weight of the aluminum oxide nanoparticles, then this is preferable in terms of coating the surfaces of the aluminum oxide nanoparticles. The usage amount of the above-described silylation reagent is more preferably 0.005 to 40 parts by weight, and particularly 0.01 to 30 parts by weight with respect to 1 part by weight of the aluminum oxide nanoparticles.

### {Removal of byproduct of hydrolysis and unreacted raw material}

In the reaction system treated with the silylation reagent, an unreacted silylation reagent is also sometimes contained besides the self-condensate of the silylation reagent and the byproduct (alcohol, carbonic acid and the like) of the hydrolysis thereof.
When the self-condensate of the silylation reagent and the byproduct of the hydrolysis thereof remain in the obtained surface-coated aluminum oxide nanoparticles, in the case where the aluminum oxide nanoparticles are used as the filler of the polycarbonate resin, the compatibility between the aluminum oxide nanoparticles and the polycarbonate resin is sometimes deteriorated, and the dispersibility of the aluminum oxide nanoparticles into the polycarbonate resin is sometimes deteriorated. Accordingly, it is preferable that the self-condensate and the byproduct be removed in advance before melting the resin composition, and it is more preferable that the self-condensate and the byproduct be removed in advance before mixing the aluminum oxide nanoparticles and the polycarbonate resin with each other.

In the case where the unreacted silylation reagent is contained in the resin composition, when the resin composition is molten, self-condensation of the unreacted silylation reagent advances, and aggregates of the self-condensate are formed, whereby it sometimes becomes impossible to remove the unreacted silylation reagent from the resin composition, and the silylation reagent sometimes aggregates the aluminum oxide nanoparticles in the resin composition.
An extent of such a phenomenon differs depends on the reactivity of the silylation reagent, the number of functional groups thereof, and the compatibility thereof with the solvent and the polycarbonate resin. In the case of the monofunctional silylation reagent like the methoxytrimethylsilane, the ethoxytrimethylsilane and the acetoxytrimethylsilane, the self-condensate only becomes a dimer of the silylation reagent, and accordingly, can be removed in the case of being molten even if remaining in the resin composition. However, in the case of the bifunctional silylation reagent, the unreacted silylation reagent crosslinks the aluminum oxide nanoparticles and the resin, and aggregates the aluminum oxide nanoparticles, and the self-condensate becomes more than the dimer of the silylation reagent, and becomes difficult to move. Accordingly, it is preferable to remove the unreacted silylation reagent and the like before melting the resin composition.

Specifically, such a removal operation can be performed by distillation and extraction by the organic solvent, or precipitation of the resin composition into the organic solvent, and the ultrafiltration.

In the case of removing the unreacted silylation reagent and the like by the distillation, a solvent with a higher boiling point than that of the silylation reagent is added thereto in advance as the solvent at the time of the silylation treatment. And, from a reaction solution after the silylation treatment, the unreacted silylation reagent, the self-condensate and the byproduct by the hydrolysis are distilled, whereby these components can be removed. Alternatively, such a solvent with the higher boiling point is not added and used as the solvent at the time of the silylation reagent, but, in the case of expelling the unreacted silylation reagent, the self-condensate thereof and the product by the hydrolysis thereof to the outside of the system by the distillation after the treatment reaction, such a solvent may be added and used as a substitution solvent for the purpose of enhancing efficiency and extent of such expelling.

In the case of extracting these components by the organic solvent, the aluminum oxide nanoparticles can be separated from these components by the following method. First, a part of the silylation reagent, a part of the self-condensate of the silylation reagent, and a part of the product by the hydrolysis of the silylation reagent are separated by the filtration, sedimentation, centrifugal separation and distillation of the silylation reagent. And then, the remaining silylation reagent, the remaining self-condensate of the silylation reagent and the remaining product by the hydrolysis of the silylation reagent can also be extracted by an organic solvent such as hexane, acetone and methanol.
Moreover, the resin composition obtained by mixing the aluminum oxide nanoparticles subjected to the silylation treatment and the polycarbonate resin with each other is extracted by the above-described organic solvent, whereby the unreacted silylation reagent and the like can also be removed. A mixture sol solution of the aluminum oxide nanoparticles subjected to the silylation treatment and the polycarbonate resin is dropped onto the organic solvent such as the hexane, whereby the unreacted silylation reagent and the like can also be removed.

In the case where only the self-condensate of the silylation reagent cannot be removed by the distillation among the byproducts, the self-condensate can be removed by the following method. First, the unreacted silylation reagent and the product by the hydrolysis are removed by the distillation from the aluminum oxide nanoparticles subjected to the silylation reagent. And then, at the stage of a mixed liquid or the resin composition after the polycarbonate resin is mixed with the aluminum oxide nanoparticles, a similar method to that described above is performed.

In the case of removing the self-condensate and the product of the hydrolysis by the ultrafiltration, the same solvent as the solvent for use in the silylation treatment is flown through a column of the ultrafiltration, whereby the self-condensate and the product of the hydrolysis can be removed together with the unreacted silylation reagent. In addition, solvent substitution for an appropriate solvent can be performed simultaneously.

In the case where the aluminum oxide nanoparticles are treated with the silylation reagent in the gas phase, the unreacted silylation reagent, the self-condensed silylation reagent and the product by the hydrolysis of the silylation reagent can be directly separated from the aluminum oxide nanoparticles through a variety of separation apparatuses (separation film, cyclone and the like). Moreover, according to needs, it is also possible to wash, by the solvent, the separated aluminum oxide nanoparticles subjected to the silylation treatment.

### {Dispersant}

For the aluminum oxide nanoparticles of the present invention, there can also be used particles subjected to the surface treatment with the dispersants made of one type or two or more types of the organic sulfonic acid, the organic phosphoric acid and the derivatives of these (hereinafter, sometimes referred to as "dispersants of organic sulfonic acid/organic phosphoric acid and derivatives of these").

Chemical structures of the organic sulfonic acid, the organic phosphoric acid and the derivatives of these, which are to be used as the dispersant, are not particularly limited. However, organic acid with a carbon number of 6 or more is preferable from a viewpoint of improving the suppression effect of the thermal degradability of the resin, the mechanical property of the resin composition, and corrosiveness (for example, metal corrosiveness at the time of using a biaxial extruder) of the resin composition, which is caused by acidic group. In this point, the carbon number of the organic acid is more preferably 8 or more, and particularly preferably 10 or more.

Moreover, from viewpoints of effects of reducing a coefficient of linear thermal expansion of the resin composition and enhancing an elastic modulus thereof, it is preferable that rigid organic residues be contained in the chemical structures of the dispersants of the organic sulfonic acid/organic phosphoric acid and the derivatives of these. As such rigid organic residues, specifically, a variety of aromatic ring structures (a benzene ring, a naphthalene ring, an anthracene ring, a phenanthrene ring, a pyrene ring and the like) are preferable, and among them, the benzene ring and the naphthalene ring are particularly preferable. Moreover, such a variety of aromatic ring structures may include substituents, and for preferable substituents, a bulky structure is preferable within a range where the mechanical property is not decreased from a viewpoint of melting fluidity. Specifically, an alkyl group, an alkoxy group, an allyl group, an aryl group, and the like, each of which has a carbon number of approximately 1 to 15, and preferably approximately 1 to 12, are mentioned.

Among the dispersants, as specific examples of the organic sulfonic acid and the derivative thereof, mentioned are: alkylsulfonic acids; benzenesulfonic acids; alkylbenzenesulfonic acids; polycyclic aromatic sulfonic acids; esters of these with lower alcohol; alkaline metal salts of these; and ammonium salts of these. Examples of the alkylsulfonic acids include: methanesulfonic acid; ethanesulfonic acid; octanesulfonic acid; and dodecanesulfonic acid. Examples of the benzenesulfonic acids include: benzenesulfonic acid; p-toluenesulfonic acid; dimethyl benzene sulfonic acid; biphenylsulfonic acid; and styrenesulfonic acid. Examples of the alkylbenzenesulfonic acids include: decylbenzenesulfonic acid; undecylbenzenesulfonic acid; dodecylbenzenesulfonic acid; tridecylbenzenesulfonic acid; tetradecylbenzenesulfonic acid; and a mixture of alkylbenzenesulfonic acid having a straight-chain alkyl group with a carbon number of 10 to 14. Examples of the polycyclic aromatic sulfonic acids include: naphthalenesulfonic acid, dinonylnaphthalenesulfonic acid, naphthalenedisulfonic acid, anthracenesulonic acid, and phenanthrenesulfonic acid.

As specific examples of the organic phosphoric acid and the derivative thereof, mentioned are: phosphoric acid mono/di/trialkyl esters (for example, acid phosphates commercially available from Johoku Chemical Co., Ltd.) such as tributyl phosphate, diethyl phosphate, methyl phosphate, and butoxy phosphate; phosphoric acid aryl ester such as triphenyl phosphate, phenyl phosphate, phosphoric acid dimethyl phenyl ester, and phosphoric acid naphthyl ester; phosphoric acid ester such as dimethyl phosphonate; phosphite such as tributyl phosphite and triphenyl phosphite; phosphine oxide such as triphenylphosphine oxide; cyclic phosphite such as 9,10-dihydro-9-oxa-10-phosphaphenantrene-10-oxide (commercially available from Sanko Co., Ltd.); phosphonic acid such as methylphosphonic acid, ethylphosphonic acid, octylphosphonic acid, dodecylphosphonic acid, phenylphosphonic acid, octylphenylphosphonic acid, dodecylphenylphosphonic acid, naphthalenephosphonic acid, anthracene phosphonic acid, and phenanthrenephosphonic acid; and phosphinic acid such as methylphosphinic acid, ethylphosphinic acid, phenylphosphinic acid and diphenylphosphinic acid. Moreover, esters of these with the lower alcohol, alkaline metal salts of these, and ammonium salts of these are mentioned.

Among them, the alkylsulfonic acid, the benzenesulfonic acids, the benzenesulfonic acids in which long-chain alkyl groups are substituted, and the naphthalenesulfonic acids are preferable from viewpoints of an adsorption capacity for the aluminum oxide nanoparticles, the dispersibility of the aluminum oxide nanoparticles in the obtained polycarbonate resin composition, good melting fluidity of the polycarbonate resin composition, the suppression effect of the thermal degradability of the resin, and the mechanical property of the resin composition. Among them, the benzenesulfonic acids in which the long-chain alkyl groups are substituted, and the naphthalenesulfonic acids are preferable, and specifically, dodecylbenzenesulfonic acid and dinonylnaphthalenesulfonic acid are more preferable.

The dispersant in the surface-coated aluminum oxide nanoparticles or the dispersant in the resin composition just needs to be analyzed by a publicly known method, and there are no particular limitations to the method. For example, there are mentioned a method of determining the dispersant by the FT-IR method, the MS method and the NMR method, and a method of confirming the dispersant by the XPS method and the elemental analysis method, both of which are performed after extracting and isolating the dispersant.

### {Treatment conditions with dispersants of organic sulfonic acid/organic phosphoric acid and derivatives of these}

The treatment of the aluminum oxide nanoparticles with the dispersants of the organic sulfonic acid/organic phosphoric acid and the derivatives of these may be performed after treating the aluminum oxide nanoparticles with the silylation reagent or before treating the aluminum oxide nanoparticles with the silylation reagent. The surface-coated aluminum oxide nanoparticles of the present invention contain these dispersants, whereby the suppression of the resin degradability is achieved therefor. In this case, the dispersants may be adsorbed onto the surfaces of the aluminum oxide particles or chemically bonded thereto. In the sense that the silylation reagent is uniformly treated on the surfaces of the aluminum oxide nanoparticles and the dispersibility of the aluminum oxide nanoparticles is to be thereby maintained favorably, the method is preferable, which is of treating the aluminum oxide nanoparticles with the silylation reagent after treating the aluminum oxide nanoparticles with the dispersant.

As the surface treatment method for the aluminum oxide nanoparticles with the dispersants of the organic sulfonic acid/organic phosphoric acid and the derivatives of these (hereinafter, sometimes simply described as the "dispersant"), for example, the method disclosed in Japanese Patent Translation Publication No. 2003-517418 can be adopted.
However, in the present invention, the solvent is not limited to the carbon numbers of the dispersants, and the surfaces of the aluminum oxide nanoparticles can be directly treated without allowing the solvent to exist.
Specific methods will be shown below.

### (1) Method of contacting aluminum oxide nanoparticles and dispersant each other in water and/or organic solvent

As water and/or the organic solvent, which is used in this case, one that is liquid in a temperature range of 40 to 400°C under the normal pressure can be illustrated. As the organic solvent that exhibits the liquid property in the temperature range of 40 to 400°C under the normal pressure, there can be mentioned one type or two or more types of: aliphatic hydrocarbon solvents such as hexane and heptane; aromatic hydrocarbon solvents such as toluene and tetralin; alcohol solvents such as methanol, ethanol, *i*-propanol, n-butanol and ethylene glycol; ester solvents such as butyl acetate; ether solvents such as ethers of tetrahydrofuran, 1,4-dioxane, hexamethyldisiloxane, and ethylene glycol; ketone solvents such as methyl ethyl ketone and cyclohexanone; acetal solvents such as 1,3-dioxolane; aprotic solvents such as N-dimethylformamide and dimethyl sulfoxide; halogen solvents such as 1,1,2,2-tetrachloroethane; and the like.

The aluminum oxide nanoparticles may be sol in a state of being dispersed into another solvent including water at the point of time before being dispersed into such water and/or the organic solvent. In this case, a boiling point of this dispersion solvent is not particularly limited.
As a method of bringing the aluminum oxide nanoparticles into contact with the dispersant in water and/or the organic solvent, for example, a method of adding the dispersant to a dispersion liquid (sol) of the aluminum oxide nanoparticles into water and/or the organic solvent, or a method of adding, to the dispersant, the dispersion liquid of the aluminum oxide nanoparticles into water and/or the organic solvent is mentioned. In this case, the dispersant may be used by being diluted by water and/or the variety of organic solvents in advance, and it is preferable that the dispersant be dissolved in water and/or the variety of organic solvents.
Moreover, powder of the aluminum oxide nanoparticles is added to a solution of the dispersant into water and/or the organic solvent, whereby the sol of water and/or the organic solvent may be prepared. Under these treatment conditions, it is preferable that the dispersant or the aluminum oxide nanoparticles, which are to be added, be added gradually.
Moreover, besides the above-described methods, the surface treatment of the aluminum oxide nanoparticles can be performed in such a manner that the dispersants of the organic sulfonic acid/organic phosphoric acid and the derivatives of these are mixed with the solvent by using the ultrafiltration, and the solvent is circulated.

It is preferable that a concentration of the aluminum oxide nanoparticles in the case of the surface treatment with the dispersants of the organic sulfonic acid/organic phosphoric acid and the derivatives of these be dilute in the case of using the dispersants and water and/or the organic solvent. The concentration of the aluminum oxide nanoparticles is preferably 80 weight percent or less, and more preferably 0.5 to 50 weight percent with respect to a total amount of a treatment solution containing the dispersants, the aluminum oxide nanoparticles and water and/or the organic solvent. Moreover, it is preferable that a concentration of the dispersants as the organic sulfonic acid/organic phosphoric acid and the derivatives of these be 0.01 to 50 weight percent with respect to a total amount of a treatment solution containing the dispersants, the aluminum oxide nanoparticles and water and/or the organic solvent.
Treatment temperature and pressure in this case are not particularly limited. However, the treatment pressure is usually the normal pressure, and the treatment temperature is usually within a temperature range of 5 to 400°C, and preferably 40 to 300°C. A treatment time is usually 1 to 48 hours.

Note that water molecules contained in the aluminum oxide nanoparticles can be reduced from the sol by performing the azeotropic dehydration therefor, for example, in the case of being boiled together with the solvents mentioned above, and also by performing the ultrafiltration therefor by using a solvent in which a moisture content is restricted.
Moreover, water and/or the organic solvents can be reduced by being subjected to the distillation and/or drying of water and/or the organic solvents by heating and/or pressure reduction, the freeze drying, the spray drying, slurry drying, the filtration and the like. According to needs, the aluminum oxide treated with the dispersants can also be taken out as solids.
Moreover, the dispersion liquid (sol) of the aluminum oxide nanoparticles treated with the dispersants into water and/or the organic solvents is subjected to a variety of solvent exchange steps, for example, the distillation using a boiling point difference, the ultrafiltration and the like, and thereby can also be exchanged into a desired dispersion liquid (sol) of the organic solvents.
Furthermore, the solids of the aluminum oxide nanoparticles treated with the above-described dispersants are redispersed into a desired organic solvent, and thereby can also be exchanged into the dispersion liquid (sol) of the aluminum oxide nanoparticles treated with the dispersants into the organic solvent.

### (2) Method of directly contacting powder aluminum oxide nanoparticles and dispersant each other

As a method of treating the powder of aluminum oxide nanoparticles by allowing the dispersant to directly act thereon, for example, there is a method of adding the dispersant to the powder of the aluminum oxide nanoparticles, or adding the powder of the aluminum oxide nanoparticles to the dispersant. At this time, in the case where a dispersant that becomes liquid at the treatment temperature of the powder aluminum oxide nanoparticles, it is also possible to treat the powder aluminum oxide nanoparticles without using any solvent. In the case where the dispersant is solid at the treatment temperature, it is preferable to use the dispersant by dissolving the dispersant into water and the organic solvent.

In the case of using the dispersant by diluting the dispersant by water and/or the variety of organic solvents in advance, it is preferable tat the dispersant be dissolved into water and/or the variety of organic solvents.
From a viewpoint of effectively treating the surface of the single aluminum oxide nanoparticle by the dispersant, it is preferable that the powder of the aluminum oxide nanoparticles and the dispersant be treated under agitated conditions (for example, under good agitated conditions in an agitation bath including the Henschel mixers or a mechanical stirrer). Moreover, it is preferable that the powder of the aluminum oxide nanoparticles be in a state where the surface area is large in which the primary particles are not aggregated together to a possible extent (for example, powder obtained by the freeze drying, the spray drying and the slurry drying). According to needs, the powder of the aluminum oxide nanoparticles may be used in a wet state in which the starting solvent such as water is allowed to remain therein appropriately.
A treatment temperature in this case is not particularly limited. However, the treatment temperature is usually 5 to 400°C, and preferably 10 to 300°C. Moreover, a treatment time is usually 1 to 48 hours, and the treatment pressure is not particularly limited.
The powder of the aluminum oxide nanoparticles treated with the dispersant in such a manner as described above is redispersed into a desired organic solvent, and thereby can also be converted into such an organic solvent dispersion liquid (sol) of the aluminum oxide nanoparticles treated with the dispersant.

A usage amount of the dispersants of the organic sulfonic acid/organic phosphoric acid and the derivatives of these with respect to the aluminum oxide nanoparticles in the above-described methods (1) and (2) is usually 0.01 to 200 weight percent, and from a viewpoint of ensuring the good fluidity, transparency, thermal stability and mechanical property of the polycarbonate resin composition using the surface-coated aluminum oxide nanoparticles of the present invention, the usage amount is more preferably 0.02 to 100 weight percent. If the usage amount of the dispersants is less than 0.01 weight percent, then sufficient effects for the good fluidity of the polycarbonate resin composition, the dispersibility (transparency) of the aluminum oxide nanoparticles, and the thermal stability of the polycarbonate resin cannot be obtained. Meanwhile, if the usage amount exceeds 200 weight percent, then an influence of excessive dispersants which do not act on the surfaces of the aluminum oxide nanoparticles is increased, the mechanical property of the polycarbonate resin composition is decreased. Further, because of reasons such as the degradation of the polycarbonate resin and an increase of a volatile component, which are caused by the excessive dispersants, a problem occurs also in residence thermal stability. Moreover, because of metal corrosiveness of the excessive dispersants, elution of the metal component from a production apparatus (for example, the biaxial extruder) of the resin composition sometimes also becomes a problem.

In the case where it is necessary to favorably maintain the dispersibility of the aluminum oxide nanoparticles into the desired sol or in the resin composition, it is preferable that the surface treatment for the aluminum oxide nanoparticles with the dispersants of the derivatives of the organic sulfonic acid/organic phosphoric acid and the derivatives of these be performed in the liquid phase.

### [Organic sol]

The organic sol of the present invention is obtained by the production method of the surface-coated aluminum oxide nanoparticles of the present invention, which is as described above, that is, by the step of producing the surface-coated aluminum oxide nanoparticles by performing the surface treatment for the above-mentioned aluminum oxide nanoparticles with the above-described dispersant and the silylation reagent. In usual, the organic sol of the present invention contains the surface-coated aluminum oxide nanoparticles of the present invention by a concentration of 0.1 to 50 weight percent in the dispersion solvent of the surface-coated aluminum oxide nanoparticles in a production method of the resin composition of the present invention, which will be described later.

If the moisture in the above-described organic sol is too much, the silylation reagent residues are sometimes hydrolytically degraded from the silylated aluminum oxide particles, and the moisture sometimes becomes a water source for use in the hydrolysis reaction of the polycarbonate, in which the aluminum oxide nanoparticles and impurity metal elements in the sol catalyze. Accordingly, a content of the moisture is usually 10 weight percent or less, preferably 5 weight percent or less, more preferably 1 weight percent or less, and still more preferably 0.1 weight percent or less. This moisture content can be analyzed by the Karl Fischer technique to be described later.

### [Resin composition]

The resin composition of the present invention includes: the surface-coated aluminum oxide nanoparticles of the present invention, which is surface-modified by being surface-coated with the dispersant and the silylation reagent, which are as described above; and the polycarbonate resin.

### {Content of surface-coated aluminum oxide nanoparticles}

In the resin composition of the present invention, the content of the surface-coated aluminum oxide nanoparticles of the present invention, which is surface-modified as described above, is usually 0.1 to 70 weight percent. From a viewpoint of an effect of enhancing the mechanical strength, elastic modulus and dimensional stability of the resin composition, a lower limit of the content is preferably 5 weight percent, still more preferably 10 weight percent, and most preferably 15 weight percent. From a viewpoint of ensuring toughness (not fragile but persistent property) and moldability of the resin composition, an upper limit of the content is preferably 60 weight percent, still more preferably 50 weight percent, and most preferably 40 weight percent.

Note that a total amount of the content of the aluminum oxide nanoparticles and the silylation reagent-derived silicon component in the resin composition can be confirmed by measuring an ash content to be described later. This ash content is analyzed as a residual amount of the resin composition in the case of heating the resin composition up to 600°C in the air, and accordingly, in usual, is calculated as a total amount of contents of aluminum oxide (Al₂O₃) and silica (SiO₂). Hence, the ash content is actually determined by the amount of the aluminum oxide nanoparticles and the amount of the silylation reagent-derived silicon component contained in the aluminum oxide nanoparticles. Here, the ash content in the resin composition including the surface-modified aluminum oxide nanoparticles is usually 0.1 to 70 weight percent with respect to the resin composition. From the viewpoint of enhancing the mechanical strength, elastic modulus and dimensional stability of the resin composition, a lower limit of the ash content is preferably 5 weight percent, still more preferably 10 weight percent, most preferably 15 weight percent, and particularly preferably 20 weight percent. From the viewpoint of the toughness (not fragile but persistent property) and moldability of the resin composition, an upper limit of the ash content is preferably 60 weight percent, still more preferably 50 weight percent, and most preferably 40 weight percent.

### {Dispersed state of surface-coated aluminum oxide nanoparticles}

The dispersed state of the surface-coated aluminum oxide nanoparticles of the present invention in the polycarbonate resin composition of the present invention is not particularly limited. However, it is preferable that the primary particles of the surface-coated aluminum oxide nanoparticles be highly dispersed into the polycarbonate resin without being aggregated, and in particular, a state where the primary particles of the surface-coated aluminum oxide nanoparticles are substantially single and uniformly dispersed is preferable from the viewpoint of ensuring the transparency, dimensional stability and mechanical property of the polycarbonate resin composition.
The dispersed state of the surface-coated aluminum oxide nanoparticles in the resin composition can be confirmed by observing the obtained polycarbonate resin composition by using a transmission electron microscope (TEM) to be described later.

With regard to the dispersed state of the surface-coated aluminum oxide nanoparticles in the polycarbonate resin composition, specifically, in observation of arbitrary 10 viewing fields by the TEM, it is desirable that a major axis (maximum diametral direct distance) of actually dispersed particles be 10 to 1000 nm. Hereinafter, actually dispersed particles are sometimes described as "dispersed particles". However, an aggregated particle in which the primary particles can be identified is regarded as one particle in an aggregated state. An upper limit value of the major axis is more preferably 700 nm, and still more preferably 500 nm from the viewpoints of the transparency and the mechanical property. Meanwhile, a lower limit value of the major axis is more preferably 30 nm, and still more preferably 50 nm in the effect of increasing the mechanical strength and the elastic modulus and the effect of reducing the thermal expansion coefficient.

In such dispersed particles, it is preferable that an aspect ratio (length-to-width dimensional ratio) thereof be large in the effect of increasing the mechanical strength and the elastic modulus and the effect of the dimensional stability. A definition of the aspect ratio mentioned herein is a value as an arithmetic mean of values, each of which is obtained by dividing the major axis of one dispersed particle observed by the TEM by the minor axis (minimum diametral direct distance) thereof, the values being of all the dispersed particles measured by the above-described observation of the arbitrary 10 viewing fields. In such calculation, commercially available image processing software may be utilized.

### {Polycarbonate resin}

The polycarbonate (PC) resin is a copolymer produced by a reaction between one or more types of bisphenols which can contain multivalent (trivalent or more) phenols as copolymerization components and carbonic acid esters such as bis alkyl carbonate, bis aryl carbonate and phosgene. According to needs, in order to obtain aromatic polyester carbonates, aromatic dicarbonic acid such as terephthalic acid and isophthalic acid or a derivative (for example, aromatic dicarboxylic diester and aromatic dicarboxylic chloride) thereof may be used as the copolymerization component.

As the bisphenols, illustrated are bisphenol A, bisphenol C, bisphenol E, bisphenol F, bisphenol M, bisphenol P, bisphenol S, bisphenol Z (for abbreviations, refer to the reagent catalog of Sigma-Aldrich Co.), and the like. Among them, the bisphenol A and the bisphenol Z, in which a central carbon is a part of cyclohexane rings, are preferable, and the bisphenol A is particularly preferable.

As copolymerizable trivalent phenols, 1,1,1-(4-hydroxyphenyl)ethane, phloroglucinol and the like can be illustrated.

One type of the polycarbonate resin may be used singly, or two or more types thereof may be used as a polymer blend in conjunction with each other, or the polycarbonate resin may be a copolymer of plural types of monomers.

There are no particular limitations to a production method of the polycarbonate resin. Any publicly known method can be adopted, which are, for example: (a) an interface polymerization method in which alkaline metal salts of the bisphenols and a carbonate derivative (for example, phosgene) active in nucleophilic attack are used as raw materials, and the raw materials are subjected to a polycondensation reaction on an interface between an organic solvent (for example, methylene chloride and the like) that dissolves such a created polymer and alkaline water; (b) a pyridine method in which the bisphenols and the above-described carbonate derivatives active in the nucleophilic attack are used as raw materials, and the raw materials are subjected to the polycondensation reaction in organic bases of pyridine and the like; (c) a melting polymerization method in which the bisphenols and carbonate such as the bis alkyl carbonate and the bis aryl carbonate (preferably, diphenyl carbonate) are used as raw materials, and the raw materials are subjected to melting polycondensation; (d) a production method using, as raw materials, the bisphenols and carbon monoxide and carbon dioxide; and the like.

As a weight-average molecular weight by GPC (gel permeation chromatography; monodisperse polystyrene is used as a reference material, and for detection, a general-purpose ultraviolet ray detector with a wavelength of 254 nm is used) which uses, as a developing solvent, chloroform generally used by those skilled in the art, the molecular weight of the polycarbonate resin is usually 15 thousands or more, and preferably 20 to 200 thousands. From the viewpoint of the mechanical property, a lower limit of the weight-average molecular weight is preferably 30 thousands, and more preferably 40 thousands. From the viewpoint of the melting fluidity, an upper limit of the weight-average molecular weight is preferably 150 thousands, and more preferably 100 thousands. Comprehensively summarizing the above, the most preferable range of the weight-average molecular weight is 40 to 90 thousands.
Meanwhile, a number-average molecular weight of the polycarbonate resin represents an index of a length of molecular chains of the polymer, and is usually, 3 thousands to 50 thousands. Because of the same reason as that of the weight-average molecular weight, a lower limit of the number-average molecular weight is preferably 5 thousands, and more preferably 7 thousands, and an upper limit thereof is preferably 40 thousands, and more preferably 30 thousands.

Note that, in the measurement in the above-described GPC, the given resin composition is dissolved into the chloroform by approximately 0.1 weight percent, an undissolved component is filtered by a commercially available membrane filter of 0.45 µm, and a residual solution is used. Details of such a measurement method will be described in the paragraphs of examples.

In the surface-coated aluminum oxide nanoparticles of the present invention, catalytic activity thereof for the hydrolysis of the polycarbonate resin is reduced. Accordingly, with respect to the weight-average molecular weight of the polycarbonate resin used for preparing the resin composition, a ratio of the weight-average molecular weight of the polycarbonate resin in the obtained resin composition can be set at 25% or more, more preferably 40% or more, still more preferably 50%, and particularly preferably 60% or more.

Moreover, a glass transition point Tg of the polycarbonate resin for use in the present invention is usually 120 to 220°C, and from viewpoints of heat resistance and the melting fluidity, is preferably 130 to 200°C, and more preferably 140 to 190°C.

### {Other components}

The resin composition of the present invention includes: the surface-coated aluminum oxide nanoparticles of the present invention; and the polycarbonate resin. However, the resin composition can contain other additives according to needs within the range where the object of the present invention is not damaged.

For example, for a variety of usage purposes and for obtaining desired performance, an impact resistance improver such as thermoplastic resin and thermoplastic elastomer, which include styrene resin, polyester resin and the like, may be blended to the resin composition.

In usual, the impact resistance improver exists under phase separation in a matrix of the polycarbonate resin, and accordingly, in order to suppress a transparency decrease owing to light scattering, it is desirable to approximate a refractive index of the impact resistance improver to a refractive index of the matrix of the polycarbonate resin to a possible extent.

Moreover, the following additives may be added to the resin composition of the present invention; a phosphite thermal stabilizer (for example, tris(2,4-di-tert-butylphenyl)phosphite regularly used under the commercial name of MARK 2112, and the like), a benzotriazol ultraviolet absorber, a plasticizer, a lubricant, a mold release agent, a colorant such as pigment, and an antistat. For example, for the purpose of enhancing the thermal stability of the resin composition at the time of the molding thereof, there can be added a stabilizer including a phosphoric compound, and an additive such as long-chain fatty alcohol and long-chain fatty ester. The stabilizer is represented by hindered phenols such as Irganox 1010 and 1076 (made by Ciba Geigy Co., Ltd.), partially acrylated multivalent phenols represented by Sumilizer GS and GM (made by Sumitomo Chemical Co., Ltd.), and phosphites such as Irgafos 168 (made by Ciba Geigy Co., Ltd.) and Adekastab LA-31.

Furthermore, there can be blended an additive including inorganic filler and the like, which are other than the surface-coated aluminum oxide nanoparticles. In this case, the additive includes glass fiber, glass flakes, glass beads, carbon fiber, fine carbon filler such as vapor phase-deposited carbon fiber and carbon nanotubes, wollastonite, calcium silicate, aluminum borate whisker, and the like.

### {Haze}

The resin composition of the present invention is characterized in that haze as a value measured by the method of JIS K7105 is 40% or less. The haze is preferably 20% or less, more preferably 10% or less, and particularly preferably 5% or less.
Details of such a measurement method of the haze will be described in the paragraphs of examples.

### {Coefficient of linear thermal expansion}

The coefficient of linear thermal expansion (K/ppm) of the resin composition of the present invention is decided from a dimensional change thereof in a length direction in a range of 30°C to 60°C, which is measured under a nitrogen atmosphere at a temperature rise rate of 5°C/min. This coefficient of linear thermal expansion (K/ppm) is preferably 20 to 60, and more preferably 30 to 50. It is preferable that the coefficient of linear thermal expansion be small in usual. However, if the coefficient of linear thermal expansion is too small, toughness thereof is sometimes decreased, and this is not preferable from the viewpoint of the mechanical property. Details of such a measurement method of this linear expansion coefficient will be described in the paragraphs of examples.

### {Toughness, tensile strength}

Evaluation of the physical property of the resin composition of the present invention is performed by a toughness test and a tensile test.
In the toughness test, toughness of the resin composition of the present invention is judged by whether or not the resin composition taken out after the mixing bends as a result of being manually bent. It is preferable that the resin composition of the present invention bend by hand, and it is not preferable that the resin composition break without bending.

The tensile test is performed in such a manner that a molded body with a width of 4 mm and a thickness of 9 mm or a dumbbell specimen according to the ISO standard is used, and a sample piece of the resin composition is pulled thereby at a testing speed of 1 mm/min under room temperature (23°C). In usual, a numeric value of the tensile strength is 70 to 150. However, a higher numeric value is preferable. A lower limit of the tensile strength is more preferably 80.
Note that details of a measurement method of the tensile strength will be described in the paragraphs of examples.

### {Si/Al ratio (mol%)}

The concentration (mol%) of the silylation reagent-derived silicon atoms with respect to the aluminum atoms in the resin composition of the present invention (hereinafter, sometimes described as the "Si/Al ratio (mol%)") is preferably 0.05 to 30, more preferably 0.1 to 25, and particularly preferably 0.1 to 20. When the Si/Al ratio (mol%) is small, the function that the aluminum oxide nanoparticles degrade the polycarbonate resin cannot be suppressed. Meanwhile, when the Si/Al ratio (mol%) is too large, the aspect ratio of the surface-coated aluminum oxide nanoparticles is damaged, the mechanical property and dimensional stability of the resin composition are decreased, the refractive index difference thereof with the polycarbonate resin is increased, and such a problem that the resin composition does not become transparent occurs.

### {N, SH, halogen contents}

When N, SH and the halogen are contained in the resin composition of the present invention, they become catalysts of the hydrolysis of the polycarbonate resin, and thereby decrease the molecular weight of the polycarbonate resin. Accordingly, it is preferable that these elements not be contained in the resin composition of the present invention, and it is more preferable that N and the halogen not be contained.
The concentrations of these elements or groups in the resin composition are preferably 0.5 weight percent or less individually, and more preferably 0.1 weight percent or less individually.

### {Melting fluidity}

From the good moldability in various moldings (injection molding, press molding, injection press molding, extrusion molding and the like), it is preferable that the polycarbonate resin composition of the present invention have high melting fluidity (that is, low apparent melting viscosity).
Specifically, under conditions where a temperature is 230°C and a shearing speed is 500⁻¹ second, this apparent melting viscosity is usually 20000 Pa·s or less, preferably 10000 Pa·s or less, more preferably 8000 Pa·s or less. Measurement of such apparent melting viscosity is performed by a commercially available melting viscosity measuring machine (for example, a capilograph and a flow tester) under a condition where a nozzle dimension L/D is equal to 8.1/2.

### [Production Method of Resin composition]

A production method of the resin composition of the present invention can be appropriately selected in response to the form of the surface-coated aluminum oxide nanoparticles for use and to the required dispersibility of the particles.
The surface-coated aluminum oxide nanoparticles can be used in either form of the dispersed sol or powder of the surface-coated aluminum oxide nanoparticles. However, in order to improve the dispersed state of the aluminum oxide nanoparticles in the resin composition, it is preferable that the surface-coated aluminum oxide nanoparticles be used as the dispersed sol.

The sol mentioned herein is a so-called colloidal dispersion liquid, and is a dispersion liquid in which the particles are non-precipitating in a stationary state (that is, in the gravitational field). There are no limitations to a mechanism in which the aluminum oxide nanoparticles are not aggregated but maintain such a dispersed state. However, in usual, chemical modification for the particle surfaces by an organic compound having electric repulsive force and affinity (compatibility) with the solvent can be illustrated.

In the case of using the surface-coated aluminum oxide nanoparticles in the form of the dispersion liquid, first, the surface-coated aluminum oxide nanoparticles are dispersed into a predetermined organic solvent. This organic solvent is not particularly limited, and an arbitrary one can be used. Moreover, the organic solvent used at the time of the treatment with the above-mentioned dispersants of the organic sulfonic acid/organic phosphoric acid and the derivatives of these and with the silylation reagent can be used as it is. However, it is preferable to select such a solvent that is at least partially mixable with the polycarbonate resin and allows the molten resin and the surface-coated aluminum oxide nanoparticles to be uniformly mixable with each other in the subsequent production process of the resin composition. In terms of cost, it is preferable that the solvent be a solvent that is unnecessary to be exchanged in the case of being mixed with the polycarbonate, that is, in the case of dissolving the polycarbonate, it is preferable that the above-described solvent be the same solvent as a solvent for the polycarbonate. Further, a solvent having a dissolving capacity for the polycarbonate is preferable.

As the organic solvent as described above, specifically, there can be illustrated: an ether solvent such as cyclic ether including tetrahydrofuran, 1,4-dioxane and the like, and ether of ethylene glycol; a halogenated alkyl solvent such as dichloromethane, 1,2-dichloroethane, chloroform, and 1,1,2,2-tetrachloroethane; an aromatic hydrocarbon solvent such as toluene, xylene, chlorobenzene, and dichlorobenzene; a ketone solvent such as methyl ethyl ketone, acetone, cyclopentanone, and cyclohexanone; an acetal solvent such as 1,3-dioxolane; and the like. One type of these organic solvents may be used singly, or two or more thereof may be used as a mixture. Among them, particularly preferable solvents are the tetrahydrofuran, the chloroform, the cyclohexanone, the 1,4-dioxane, and the 1,3-dioxolane.

In the case where the solvent for the dispersion liquid of the surface-coated aluminum oxide nanoparticles is desired to be changed to a solvent different from the solvent used at the time of the surface treatment for the aluminum oxide nanoparticles with the dispersants of the organic sulfonic acid/organic phosphoric acid and the derivatives of these and with the silylation reagent, the solvent exchange can be performed by exchanging the solvent by the distillation by using a boiling point difference between the solvents, and by the ultrafiltration. Moreover, the surface-coated aluminum oxide nanoparticles can also be redispersed into a desired solvent after being separated from the solvent by the freeze-dry method, the spray drying, the filtration and the like.

With regard to the method of producing the resin composition of the present invention, a direct mixing method (first manufacturing method) is mentioned as the simplest method. In this case, the dispersed sol of the surface-coated aluminum oxide nanoparticles or the powder thereof and the polycarbonate resin are heated and mixed together, and are molten and mixed together, whereby the resin composition into which the surface-coated aluminum oxide nanoparticles are uniformly dispersed can be obtained. As a mixer for use in the melting and the mixing, a general biaxial mixing extruder, a trace mixing extruder, a laboplasto mill, a roll mixer, and the like can be selected and used in response to a production scale. Moreover, a mixing step is also adoptable, which is in a mode of applying intense shearing to the polycarbonate resin in a dry solid state at a temperature around the glass transition point, and subsequently melting and mixing the polycarbonate resin with the surface-coated aluminum oxide nanoparticles.

As a second production method of producing the resin composition of the present invention, there can be mentioned a method of obtaining the resin composition in the following manner. In the case of using the dispersion liquid of the surface-coated aluminum oxide nanoparticles, the dispersion liquid is used as it is. In the case of using the powder of the surface-coated aluminum oxide nanoparticles, the powder is dispersed as the dispersion liquid with a desired solvent. The surface-coated aluminum oxide nanoparticles are mixed with the monomer of the polycarbonate resin to prepare a reaction solution, and thereafter, the monomer is polymerized.

In this case, the polymerization is performed by the phosgene method as a condensation reaction between a dihydroxy compound and phosgene, or a so-called ester exchange method as an ester exchange reaction between the dihydroxy compound and carbonic acid diester.

As the dihydroxy compound for use as a raw material, 2,2-bis(4-hydroxydiphenyl)propane (popularly called bisphenol A), bis(4-hydroxydiphenyl)phenylmethane, 1,1-bis-(4-hydroxyphenyl)cyclohexane, and the like are mentioned. One type of these may be used singly, or two or more types thereof may be mixed together and used.
Moreover, as such a carbonic acid diester compound, diaryl carbonate such as diphenyl carbonate; and dialkyl carbonate such as dimethyl carbonate and diethyl carbonate are mentioned. One type of these may be used singly, or two or more types thereof may be mixed together and used.

As a third production method of producing the resin composition of the present invention, there can be mentioned the following method of obtaining the target resin composition, in which the surface-coated aluminum oxide nanoparticles are uniformly dispersed. In the case of using the dispersion liquid of the surface-coated aluminum oxide nanoparticles, the dispersion liquid is used as it is. In the case of using the powder of the surface-coated aluminum oxide nanoparticles, the powder is dispersed as the dispersion liquid with a desired solvent. The above-described dispersion liquid of the surface-coated aluminum oxide nanoparticles and the organic solvent containing the polycarbonate resin are mixed and agitated, and only the solvent is evaporated at a temperature and a pressure, which are required for evaporating the solvent. In this case, viscosity of the solution rises as the weight of the solvent is reduced. However, it is desirable that the solution be continued to be agitated until it becomes impossible to agitate the solution. In such a way, the surface-coated aluminum oxide nanoparticles in the resin composition can be more uniformly dispersed thereinto without being aggregated. However, for the weight reduction of the solvent, an apparatus that does not have an agitation mechanism (or has a feeble agitation effect), such as, for example, a thin film evaporate, a kneader, a spray dryer and a slurry dryer, may be used.

In the first, second and third production methods as described above, before the aluminum oxide nanoparticles are mixed with the polycarbonate resin, the aluminum oxide nanoparticles are treated with the dispersant and the silylation reagent in advance by the above-mentioned method, and are subsequently mixed with the polycarbonate resin. Then, the dispersant and the silylation reagent effectively act on the aluminum oxide nanoparticles, whereby the dispersibility of the aluminum oxide nanoparticles in the obtained polycarbonate resin composition is further enhanced, and this is preferable from the viewpoints of the transparency, the fluidity, the thermal stability, the dimensional stability and the like.

According to needs, the resin compositions obtained by the above-described second and third production method are heated and mixed by the mixer at a temperature of a melting point thereof or more in a similar way to the first production method. In such a way, the mixing of the resin and the surface-coated aluminum oxide nanoparticles can be performed more strongly, and in addition, crystallinity of the resin is decreased, whereby the transparency thereof can be enhanced.

A heating and melting temperature in the case of the melting and the mixing in the first production method and in the case of further melting and mixing the resin compositions obtained by the second and third production methods is usually 150 to 350°C, and more preferably 200°C. An upper limit value of the heating and melting temperature is preferably 300°C, more preferably 280°C, and particularly preferably 250°C.

In the case where the heating and melting temperature does not reach 150°C, the polycarbonate resin component is not molten. Meanwhile, in the case where the heating and melting temperature exceeds 350°C, the acceleration of the hydrolysis of the polycarbonate resin and the quality deterioration of the aluminum oxide nanoparticles subjected to the silylation reagent, which are caused by the thermal degradation, hydrolysis and oxidation deterioration of the polycarbonate, and by the desorption of the dispersant, become significant. Accordingly, both of the cases are not preferable.

Note that, for the purpose of holding the molecular weight of the polycarbonate by removing the volatile component (water and bisphenol A created as a result of that the polycarbonate is degraded) at the time of the heating and the melting, the melting and the mixing may be performed under a reduced pressure by using a vent-type extruder, and so on.

The resin composition obtained as described above is formed into a pellet shape according to needs.

### [Analysis of Resin composition]

For example, by a method as below, it is analyzable whether or not the aluminum oxide nanoparticles included in the resin composition including the polycarbonate resin and the aluminum oxide nanoparticles are the surface-coated aluminum oxide nanoparticles of the present invention, in which the surfaces are coated with the dispersant and the silylation reagent.
[1] Surface analysis by HAADF-STEM and STEM-EDX
   HAADF-STEM: abbreviation of High Angle Annular Dark Field-Scanning TEM
   In this surface analysis, if the silicon component is detected on the surfaces of the aluminum oxide nanoparticles, then it can be directly confirmed that the resin composition includes the surface-coated aluminum oxide nanoparticles of the present invention.
[2] Bulk elemental analysis
   If the silicon component is detected in the resin composition by this analysis, then it can be more simply confirmed that the resin composition includes the surface-coated aluminum oxide nanoparticles of the present invention.
   Note that details of both of the analysis methods will be described in the paragraphs of examples.

### [Usage purpose of resin composition]

As a molded body, the resin composition of the present invention combines excellent characteristics in the mechanical strength, the dimensional stability, the thermal stability, the transparency and the like. Accordingly, for example, the resin composition can be effectively used as follows. Usage purposes of the resin composition include: a transparent cover of an instrument panel as an automotive interior material; and a window glass, headlamps, a sunroof, combination lamp covers and the like as automotive exterior materials. Further, in fields of transparent members, accessories, furniture and the like, which are used in electric appliances and houses, the resin composition can be used as an alternative material of glass.

### [Molded body]

The resin composition of the present invention is used as a molded body for the above-described usage purposes. A shape, size, characteristics and molding method of the molded body of the present invention, which is formed by molding the resin composition of the present invention, is as follows.

### {Shape/size}

The molded body of the present invention is usually molded as a flat plate such as the window glass or into a planar shape such as a thin-plate shape. For a shape of a surface of the molded body, a planar surface, a curved surface (including, for example, spherical surface, aspherical surface, cylindrical shape/conical shape), a continuous combination of some planar and curved surfaces are possible.
A thickness of such a planar molded body is usually 0.1 to 10 mm. In the usage purpose of a structural member such as the window glass, the thickness is preferably 1 to 8 mm, and more preferably 2 to 6 mm from the viewpoints of the mechanical strength and the transparency.
Meanwhile, an area of the molded body is usually 1 cm² to 10 m². In the usage purpose of the structural member such as the window glass, the area is preferably 10 cm² to 7 m², and more preferably 100 cm² to 5 m² from the viewpoints of a function and mechanical strength as the window.
In the case where such a molded body includes the curved surface, a curvature radius of a spot is usually 10 to 10000 mm. In the usage purpose of the structural member such as the window glass, a lower limit of the curvature radius is preferable 100 mm from a viewpoint of the moldability.
The molded body of the present invention may be formed into a structure with which another material is integrated like a window frame and a frame by fully using a molding technology such as a co-injection molding method and a multi-injection molding method. For such another material, usually, a composite material with a high elastic modulus and a low coefficient of linear thermal expansion is used.

### {Characteristics}

In the molded body of the present, which uses the resin composition of the present invention, conditions for the injection molding and injection compression molding are controlled, whereby it is possible to effectively achieve the enhancement of the elastic modulus and the reduction of the coefficient of linear thermal expansion while maintaining the high transparency (haze is 55 or less). This is assumed to be because factors affecting the physical property of the molded body, such as orientation property of the aluminum oxide nanoparticles as the filler, are more preferably controlled in the molded body.
Specifically, a larger modulus of elasticity in tension (Young's modulus) in the surface direction of the molded body is preferable. By molding controlled in a good manner, the modulus of elasticity in tension is achievable, of which value is usually 5 GPa or more, preferably 7.5 GPa or more, more preferably 8.5 GPa or more, and most preferably 9.5 GPa or more. As another scale, the following numeric value obtained by dividing this elastic modulus (unit: GPa) by the ash content (weight percent) is possible. A larger numeric value concerned is preferable, and is usually 0.25 or more, preferably 0.35 or more, more preferably 0.4 or more, and most preferably 0.45 or more.
Moreover, it is possible for the molded body of the present invention to achieve the coefficient of linear thermal expansion in the surface direction, which is usually 45 ppm/K or less, preferably 40 ppm/K or less, and more preferably 35 ppm/K or less. A lower coefficient of linear thermal expansion concerned is preferable.

In any of such measurements, a small piece advantageous for the measurement is obtained by being sliced according to needs from, for example, a window-like large-size molded article, and the measurement may be performed for this small piece. As such a small piece, one with a dumbbell specimen shape, for example, with a dimension according to the ISO or ASTM standard is mentioned as a suitable one.

Moreover, physical properties as below are desired for the molded body of the present invention.
(1) The molded body shall pass an impact resistance test in the JIS R3211 standard as a standard of the window glass. In the impact resistance test, it is necessary that a total weight of broken pieces generated on a back surface side of the molded body be a fixed value or less in the case where a steel ball with a weight of approximately 230 g is dropped from a height of approximately 5 to 6 m, and is allowed to collide with the molded body.
(2) The molded body shall be excellent in light fastness (in particular, ultraviolet resistance).
   For this purpose, 0.01 to 1 weight percent, and preferably 0.1 to 0.5 weight percent of a general-purpose ultraviolet absorber (for example, a benzotriazol compound. SUMISORB 340 is mentioned as an article name) may be contained in advance in the resin composition composing the molded body. Moreover, a commercially available ultraviolet cut film may be pasted on the surface of the molded body.
(3) Surface hardness of the molded body shall be large, and as pencil hardness, shall be usually F or more, preferably H or more, and more preferably 2H or more.
   For this purpose, a silica hard coat layer may be stacked on the surface of the molded body according to needs, and in this case, an acrylic organic thin film may be interposed as an anchor coat of an intermediate layer.

### {Molding method}

There are no limitations to the molding method of the molded body of the present invention as long as the molded body can be molded into the above-described shape and size. However, in usual, publicly known methods such as injection molding, injection compression molding, extrusion molding, press molding, vacuum press molding, and the above-described co-injection molding method and multi-injection molding method, can be used.
Among them, the injection compression molding is preferable in the case of obtaining a window-like molded body as relatively large as approximately several 10 cm square or more, and preferably 1 m square or more.

The present invention will be described below more specifically by examples. However, the present invention is not limited to the following examples unless the examples are beyond the gist of the present invention. Note that, in the following, details of a variety of analysis measurement methods are as follows.

### [1] Analysis method of surface-coated aluminum oxide nanoparticles

### (1) X-ray photoelectron spectroscopy (XPS)

Under the following conditions, analysis for Si, Al, S of SH, N, F, Cl, Br and I on the surfaces of the surface-coated aluminum oxide nanoparticles was implemented.
<Measurement conditions>
Measuring apparatus: Quantum2000 made by Ulvac-PHI, Incorporated
X-ray source: monochromated Al-Kα ray
Output: 16kV - 30W
X-ray generation area: 150 µmø
Charge neutralization: using electron gun of 2µA, and ion gun
Spectroscopy: pass energy
At time of measuring wide spectrum = 187.85eV
At time of measuring narrow spectra (N1s, F1s, Si2p, Cl2p, Br3p, I3d) = 58.7eV
At time of measuring narrow spectra (Al2p, S2p) = 29.35eV
Measured region: 300 µm square
Take-off angle: 45°
Reference (correction method) of energy axis: correct energy axis by taking Al2p peak of boehmite as 74.0eV
The surface element composition of the aluminum oxide nanoparticles was quantitated from the narrow spectra. However, with regard to N, F, Cl, Br and I in the following Examples 1, 4 and 6 and Comparative example 5, and F, Cl, Br and I in the following Examples 5, 8, 9 and 10 and Comparative examples 3 and 6, the surface element compositions were quantitated from the wide spectra.
Note that a sample creation method of the surface-coated aluminum oxide nanoparticles to be served for the X-ray photoelectron spectroscopy (XPS) was performed in the following manner.
After the surface-coated aluminum oxide nanoparticles are subjected to the silylation treatment, similar treatment to the preparation of the polycarbonate resin composition is performed without using the polycarbonate resin, specifically, in the case where the excessive unreacted silylation is contained in the silylation step, the silylation reagent is removed.

### (2) Analysis method of moisture of cyclohexanone sol

Karl Fischer technique (coulometric titration method)
Measuring apparatus: CA-100 made by Dia Instrument Co., Ltd.
Reagent: Aquamicron AKX/CXU made by Mitsubishi Chemical
Corporation
Thief: glass injector (1 ml)
Parameter: End Sense: 0.1 µg/S

### [2] Analysis method of aluminum oxide nanoparticles/polycarbonate resin composition

### (1) Elemental analysis method of Si and Al

After the sample was subjected to alkali fusion, measurement was performed for a solution subjected to acid dissolution by ICP-AES (Inductively Coupled Plasma Atomic Emission Spectrometer).
Measuring apparatus: ICP-AES: ULTIMA2C made by Horiba, Ltd.

### (2) Analysis method of N

Trace nitrogen analyzer: TN-10 made by Mitsubishi Chemical Corporation (combustion degradation-chemiluminescent method)
Organic element analyzer: PERKIN ELMER SERIES II CHNS/O 2400

### (3) Analysis method of halogen

Combustion absorption-IC (ion chromatograph) method
An alkaline solution added with a reducing agent was used as an absorption liquid.

### (4) Analysis of Si and Al on surfaces of aluminum oxide nanoparticles in resin composition

Analysis for surfaces of aluminum oxide nanoparticles by HAADF-STEM and STEM-EDX
TEM: transmission electron microscope
Fabrication method of sample
A boehmite/polycarbonate resin composition was thinly sliced at a set thickness of 30 nm by an ultramicrotome.
TEM measuring apparatus and condition
TEM apparatus: Tecnai G2 F20 S-Twin made by FEI Company
Applied voltage: 200kV
EDX system: Phoenix made by EDAX, Inc.
Detector: Sapphire 30 mm² SUTW
HAADF image acquisition condition: camera length 100 mm
Extracting voltage: 4500V
GunLens: 6
Spot: 6 at time of HAADF-STEM imaging; 3 to 6 at time of EDX
measurement
From an acquired EDX spectrum, the concentrations of Si and Al were semiquantitatively calculated by the standardless thin film approximation method by means of ES Vision 4.0 as software made by Emispec Systems, Inc and attached to the apparatus.
Background correction was implemented in the above-described software under the following conditions:
Correction Mode: Modeled
Model: Multi-Polynomial
Max Polynomial Order: 3

### (5) Measurement method of ash content

By using a platinum pan, the aluminum oxide nanoparticles/polycarbonate resin composition was heated up in the air from the room temperature (approximately 23°C) to 600°C at a rate of 10°C/min. Then, by "TG-DTA320" made by Seiko Instruments Inc., the ash content was calculated as a weight percent of the residual component with respect to the original resin composition from a weight reduction after the composition was held for 30 minutes.

### (6) Measurement method of weight average/number-average molecular weights

GPC analysis condition -1
In Examples 1 to 10 and Comparative examples 1 to 6, a 0.1 weight-percent chloroform solution of the resin composition was prepared, an undissolved was filtered by the filter of 0.45 µm, and only a soluble component was analyzed by the gel permeation chromatography (GPC).
Measuring apparatus: Built-up System 8022 made by Tosoh Corporation
Column: Tosoh TSKgel GMHhr-M (30cm×2) made by Tosoh Corporation
Column temperature: 40°C
Detector: TOSOH UV 8020 (254 nm) made by Tosoh Corporation
Mobile phase: CHCl₃ (Guaranteed Reagent)
Calibration method: polystyrene conversion
Injection amount: 0.1 weight percent (as resin composition) × 100 µL
Note that the calculation of the average molecular weight was performed only for a high molecular-weight component at a peak split at a low molecular weight-side minimum point of a peak including an elution position of polystyrene with a molecular weight of 400.
In Examples 11 to 14, conditions only in items described in the following GPC analysis condition -2 were changed, and except for this, analysis was performed by a similar method to that including the above-described GPC analysis condition -1.
GPC analysis condition -2
Measuring apparatus: HLC-8220GPC made by Tosoh Corporation
Column: TSK GEL SUPER HZM-M made by Tosoh Corporation
Detector: UV-8220 (254 nm) made by Tosoh Corporation
Injection amount: 0.1 weight percent (as resin composition) × 10 µL

### (7) Measurement method of haze

After the resin composition was molten and mixed, the resin composition was subjected to heat press molding, whereby a test piece film with a thickness of 1.0 mm was created. For this film, the haze was measured by a haze meter ("HM-65 Type" made by Murakami Color Research Laboratory Co., Ltd.) in accordance with the method of JIS K7105.

### (8) Measurement method of coefficient of linear thermal expansion

### 1. Simple method (hereinafter, this method was used unless otherwise specifically noted)

After the resin composition was molten and mixed, the resin composition was formed into a columnar shape with a bottom surface diameter of 5 mm and a length of 10 mm or into a strand with a diameter of 3 mm and a length of 10 mm, which was molded by a vacuum trace mixer, whereby a sample was formed. Then, a dimensional change of the resin composition in the length direction within a range of 30°C to 60°C was measured at a temperature rise rate of 5°C/min with a load of 20 g in a nitrogen atmosphere by using a dilatometer ("TD5000" made by Bruker AXS (former Mac Science) GmbH). From the measured dimensional change, the coefficient of linear thermal expansion of the resin composition was decided. The sample was heated up to 100°C at a temperature rise rate of 5°C/min before the measurement, and was subjected to the measurement after being cooled down to the room temperature. Quartz was used for a standard sample, and temperature correction was performed based on fusing temperatures (softening temperatures) of Ga and In.

### 2. Slicing method

A sample was sliced into a strap shape with a longitudinal length of 70 mm from a stretched portion of the dumbbell specimen according to the ISO standard, which was obtained by the injection molding to be described below. Then, an end surface of the sample was finished smoothly. Then, by using a quartz-tube longitudinal dilatometer in conformity with the ASTM D696 (year 1979), a coefficient of linear thermal expansion of the sample in a temperature range of 25°C to 100°C was calculated from a length change thereof in the case where the sample was heated up to 100°C at a rate of 2°C/min.

### <Injection molding>

By using the FN2000 injection molder (screw diameter: 40 mm) made by Nissei Plastic Industrial Co., Ltd., the dumbbell specimen (for use in the tensile test; width of stretched portion: 10.2 mm; thickness thereof: 4.2 mm) according to the ISO standard was molded under molding conditions where a metal mold temperature was 110°C and an injection pressure was 130 MPa.

### (9) Tensile test (measurements of tensile strength, tensile strain and modulus of elasticity in tension) method

### 1. Press method (hereinafter, this method was used unless otherwise specifically noted)

The resin composition after being mixed was subjected to the press molding, and was subjected to a cutting process into a size with a thickness of 4 mm and a width of 9 mm (that is, into a strap shape in which a cross-sectional shape has a size of 4mm × 9 mm), whereby a sample was created. Then, a tensile test was performed for the sample under conditions where a testing temperature was the room temperature (3°C) and a testing speed was 1 mm/min.

### 2. Small injection molding method

The resin composition after being mixed was molded into a micro dumbbell specimen with a width of 5 mm and a thickness of 1 mm by a small injection molder, and the micro dumbbell specimen was subjected to a tensile test under conditions were a testing temperature was set at the room temperature and a testing speed was set at 1 mm/min.

### 3. ISO method

The dumbbell specimen according to the ISO standard, which was obtained by the above-described injection molding, was used, and for the dumbbell specimen, a tensile test was performed under conditions where a tensile speed was 1 mm/min.

### (10) Evaluation method of toughness

The resin compositions taken out after being molten and mixed were used as samples. Then, the samples were manually bent. Those manually bent were represented by "o (circles: good)", and those broken without being bent were represented by "x (crosses: fragile)".

### <Reference example 1 > Synthesis of needle-like boehmite (1)

Needle-like boehmite was synthesized by the method disclosed in Example 2 of Japanese Patent Unexamined Publication No. 2006-62905.
Specifically, aluminum chloride hexahydrate (2.0 M, 40 ml, 25°C) was put into a beaker made of Teflon (registered trademark) including a mechanical stirrer. Then, while the aluminum chloride hexahydrate solution was being kept at 10°C in a thermostatic bath and was being agitated (700 rpm), sodium hydroxide (5.10 M, 40 ml, 25°C) was dropped into the beaker for 6 minutes. After the end of the dropping, the agitation was further continued for 10 minutes, and after the end of the agitation, pH of such a solution was measured (pH=7.08). The solution was shifted to an autoclave including a Teflon (registered trademark) liner. Then, the autoclave was tightly stopped, was shifted to an oil bath, and was heated at 180°C for 8 hours. Thereafter, the above-described autoclave was cooled by running water, and the content was subjected to centrifugal separation (30000 rpm, 30 min) to thereby remove a supernatant fluid. Thereafter, a residual composition thus obtained was subjected to centrifugal washing three times.
The above-described operations were repeated, and a precipitate subjected to the centrifugal separation was collected. Then, distilled water was put into the precipitate, followed by mechanical agitation, whereby boehmite particles dispersed into water (hydrosol) were obtained.
A size of the particles was investigated by using the transmission electron microscope (TEM). Then, the particles had a needle shape in which a major axis length was approximately 100 to 200 nm, a minor axis length (diameter) was 5 to 6 nm, and an aspect ratio was 16 to 40.

### <Reference example 2> Synthesis of needle-like boehmite (2)

Needle-like boehmite was synthesized by the method disclosed in Example 2 of Japanese Patent Unexamined Publication No. 2006-62905.
Specifically, aluminum chloride hexahydrate (1.8 M, 40 ml, 25°C) was put into a beaker made of Teflon (registered trademark) including a mechanical stirrer. Then, while aluminum chloride hexahydrate was being kept at 10°C in a thermostatic bath and was being agitated (700 rpm), sodium hydroxide (4.70 M, 40 ml, 25°C) was dropped into the beaker for 6 minutes. After the end of the dropping, the agitation was further continued for 10 minutes, and after the end of the agitation, pH of such a solution was measured (pH=7.88). The solution was shifted to an autoclave including a Teflon (registered trademark) liner. Then, the autoclave was tightly stopped, was shifted to an oil bath, and was heated at 180°C for 8 hours. Thereafter, the above-described autoclave was cooled by running water, and the content was subjected to centrifugal separation (30000 rpm, 30 min) to thereby remove a supernatant fluid. Thereafter, a residual composition thus obtained was subjected to centrifugal washing three times.
The above-described operations were repeated, and a precipitate subjected to the centrifugal separation was collected. Then, distilled water was put into the precipitate, followed by mechanical agitation, whereby boehmite particles dispersed into water (hydrosol) were obtained.
A size of the particles was investigated by using the transmission electron microscope (TEM). Then, the particles had a needle shape in which a major axis length was approximately 200 to 350 nm, a minor axis length (diameter) was 5 to 6 nm, and an aspect ratio was 40 to 60.

### <Reference example 3> Synthesis of needle-like boehmite (3)

Such a portion of sodium hydroxide (5.10 M, 40 ml, 25°C) in Reference example 1 was changed to sodium hydroxide (5.80 M, 40 ml, 25°C), a concentration thereof was changed to thereafter confirm that pH of a reaction solution thus obtained was 8.0, and the reaction solution was heated for 24 hours. By a similar method to that of Reference example 1 except for the above, boehmite particles were obtained. With regard to a size of the particles, a major axis length was approximately 100 nm, a minor axis length (diameter) was approximately 10 nm, and an aspect ratio was approximately 10. The obtained boehmite particles were rapidly cooled by using liquid nitrogen, and were pulverized by using a freeze drying apparatus.

### <Reference example 4> Solvent exchange from hydrosol of boehmite to cyclohexanone sol thereof and treatment with dispersant

An aqueous boehmite solution (5 weight percent, 500 g) synthesized in Reference example 1 and 1000 g of cyclohexanone were put into a flask. Then, 4 g of paratoluenesulfonic acid monohydrate made by Wako Pure Chemical Industries, Ltd. was added to a solution thus obtained while agitating the solution in the flask well by using a magnetic agitator, and the agitation was continued for 30 minutes while keeping the room temperature. Next, water was removed by using a rotary evaporator under reduced pressure. Distillation was performed until the sol in the flask increased transparency thereof. Water was removed while appropriately adding cyclohexanone for the azeotropic dehydration. An amount of cyclohexanone was adjusted so that a slid content of the sol in the flask could be 10 weight percent, and sol was obtained.
This sol was light yellow transparent sol in which yield was 250 g, the solid content was 10 weight percent, and haze was 3.2%. Note that the haze was measured by using the haze meter ("HM-65 type" made by Murakami Color Research Laboratory Co., Ltd.) after the sol was put into a cell of 10 mm square.
A moisture content of this boehmite sol was 0.3 weight percent.

### <Reference example 5> Solvent exchange from hydrosol of boehmite to methanol sol thereof

The aqueous boehmite solution (10 weight percent, 200 ml) synthesized in Reference example 2 and 800 ml of methanol were put into a glass container, and were agitated well. This mixed solution was circularly flown through a ceramic filtration membrane ("UF50000" made by NGK Insulators, Ltd.) by using a liquid feed pump, and an operation (ultrafiltration) of adding 500 ml of methanol into the glass container every time of collecting 500 ml of filtrate was repeated sixteen times. Thereafter, methanol sol was collected to obtain approximately 2L of sol.

### <Reference example 6> Preparation of freeze-dry boehmite containing dodecylbenzenesulfonic acid from boehmite hydrosol

The aqueous boehmite solution of Reference example 2 was purified by a permeable membrane (made by Viskase Compaies, Inc. (importer: Sanko Junyaku Co., Ltd.); permeated molecular weight (MWCO): 14,000; pore diameter (pore size): 50 Ǻ), and a weight percent of the aqueous boehmite solution was set at 7 weight percent. To 1430 g (solid content: 100 g) of the aqueous boehmite solution, 19 g of dodecylbenzene sulfonic acid was added after being diluted with 19 g of methanol, and a resultant solution was agitated at the room temperature for 30 minutes by a Henschel mixer FM10BF made by Mitsui Mining Co., Ltd. Subsequently, the solution was subjected to freeze drying in the following procedure by using a freeze dryer RLEII-52 made by kyowa Vacuum Technology Co., Ltd.
(1) The aqueous boehmite solution was divided into units of 500 g, and the units were set on three stages of a shelf of the freeze dryer, and were frozen at -40° for 3 hours.
(2) During this while, a cold trap was also simultaneously cooled down to -50°C.
(3) With in 10 minutes, the freeze dryer was evacuated rapidly, and was set at vacuum of 0.2 Torr (approximately 27 Pa).
(4) Leaving the freeze dryer as above, the units of the solution were subjected to the freeze drying for 20 hours, and moisture thereof was sublimated.
(5) The units of the solution were subjected to secondary drying at +30°C for 4 hours, and moisture slightly remains therein was removed.
(6) A pressure in the freeze dryer was returned to normal pressure by dry air.
   As a result of this series of operations, 118 g of dispersant-treated boehmite powder was obtained.

### <Reference example 7> Synthesis method of ultra high molecular weight polycarbonate

By using an apparatus with a pilot scale, a bisphenol A oligomer was prepared by an industrial production method according to reaction conditions conforming to an industrial production plant. In the industrial production method, a terminator such as 4-*t*-butylphenol is not added, and phosgene is injected to a two-phase system of a sodium salt solution of the bisphenol A and methylene chloride. With regard to an analysis value of the oligomer, a chloroformate concentration was 0.48 normality, a phenol hydroxyl concentration was 0.2 normality, and a solid content concentration was 26.4 weight percent.

0.30 g of 4-*t*-butyl phenol, 187.7 ml of the above-described bisphenol A oligomer, and 87 ml of dichloromethane were put into a separable flask including a mechanical stirrer, a baffle for agitation, and a two-way stopcock provided in a lower portion thereof, followed by agitation. Then, to a mixture thus obtained, 3.5 ml of a 2 weight-percent triethylamine solution and 60 g of water were added, and further, 22 ml of a 25 weight-percent sodium hydroxide solution was added, followed by strong agitation for 3 hours. Thereafter, to a resultant, 203 ml of dichloromethane was added, and thereafter, 355 ml of desalted water was added, followed by agitation for 30 minutes. Thereafter, an obtained mixture was left standing day and night, and thereafter, a dichloromethane phase was collected.

This dichloromethane phase was strongly agitated for 15 minutes together with 438 ml of a 0.1 N HCI solution, and was thereby subjected to acid wash. Thereafter, water wash of strongly agitating this subject for 15 minutes together with 438 ml of desalted water was performed four times. The dichloromethane phase obtained by the wash and the purification, which are as described above, was collected, and 0.05 g of JP650 (tris-(2,4-di-*t*-buthylphenyl)phosphite) made by Johoku Chemical Co., Ltd. was added thereto. Dichloromethane was evaporated from this solution, and a residual was dried day and nigh at 0.8 kPa and 120°C. A sodium concentration in the obtained carbonate was 10 ppm or less.
A weight-average molecular weight of this ultra high molecular weight polycarbonate according to the "GPC analysis condition -1" was 23×10⁴, and a number-average molecular weight thereof was 3.7×10⁴.

### <Example 1>

The boehmite sol of cyclohexanone, which was obtained by Reference example 4, was dispersed for 1 hour by a 42 KHz ultrasonic dispersion machine (hereinafter, this apparatus was used for ultrasonic treatment unless particularly noted). Thereafter, 9.92 g of the boehmite sol was put into a four-neck flask including a mechanical stirrer made of Teflon (registered trademark), followed by agitation under nitrogen. Into the boehmite sol thus agitated, 8.78 g of methoxytrimethylsilane as the silylation reagent, which was made by Sigma-Aldrich Co., was dropped at the room temperature. After the end of the dropping, a mixture thus obtained was dispersed for 1 hour by the ultrasonic dispersion machine, and thereafter, was heated and agitated for 4.5 hours at a bath temperature of 63 °C and an internal temperature of approximately 57°C. Thereafter, the mixture was cooled down to the room temperature, and was left at the room temperature by the next day.
The next day, the mixture was dispersed for 30 minutes by the ultrasonic dispersion machine, and thereafter, methoxytrimethylsilane and methanol in the raw materials were evaporated, and 50 g of cyclohexanone was added thereto. Then, cyclohexanone was reheated until the weight of the sol became approximately 10 to 15 g.

Cyclohexanone was further added to the cyclohexanone sol of the boehmite, which was treated with methoxytrimethylsilane, so that a boehmite concentration could become 5 weight percent. Thereafter, a resultant mixture was dispersed for 2 hours by the ultrasonic dispersion machine, and thereafter, 16.00 g of the cyclohexanone sol of the boehmite and 21.49 g of a 8.7 weight percent dichloromethane solution of polycarbonate (Novalex (registered trademark) 7030A made by Mitsubishi Engineering-Plastics Corporation; weight-average molecular weight according to GPC analysis condition -1: 7.1×10⁴; number-average molecular weight according thereto: 2.6×10⁴) was mixed with each other, and the solvent was evaporated, whereby a silylation-treated boehmite/polycarbonate resin composition (content of silylation-treated boehmite: 30 weight percent) was obtained.

The obtained composition was dried at 120°C and 0.8 KPa overnight, and thereafter, was kept warm at 230 °C for 3 minutes by a trace mixer made by Imoto Machinery Co., Ltd., and thereafter, was mixed at 15 rpm for 5 minutes at the same temperature, and was extruded.
With regard to the resin composition thus extruded, an ash content was 24 weight percent, a weight-average molecular weight according to the GPC analysis condition -1 was 4.08×10⁴, and a number-average molecular weight according thereto was 0.94×10⁴. Moreover, haze was 6.6%. In accordance with analysis by the TEM, the boehmite in the resin composition was favorably dispersed as primary particles into the polycarbonate.

### <Example 2>

A scale of the treatment was multiplied by 15, and the treatment of the boehmite was performed with methoxytrimethylsilane in a similar way to Example 1.
After the treatment was performed in a similar way to Example 1, the composition was stored under the room temperature by the next day. Then, 150 ml of cyclohexanone was added to the composition, and the composition was dispersed therein for 30 minutes. Thereafter, methoxytrimethylsilane and methanol in the raw materials were evaporated, and further, 750 ml of cyclohexanone was added and reheated until a volume of the sol became approximately 150 ml. In the case where precipitation of the boehmite was observed during this treatment, the boehmite was dispersed by the ultrasonic dispersion machine.

To the cyclohexanone sol of the boehmite treated with methoxytrimethylsilane, cyclohexanone was added so that the boehmite concentration could become 5 weight percent, and the sol concerned was subjected to ultrasonic dispersion for 2 hours by the ultrasonic dispersion machine. Thereafter, 300 g of the cyclohexanone sol of this 5 weight percent boehmite and 402 g of a 8.7 weight percent dichloromethane solution of the ultra high molecular weight polycarbonate obtained by Reference example 7 were mixed together, and the solvent was evaporated therefrom, whereby a silylation-treated boehmite/polycarbonate resin composition was obtained (content of silylation-treated boehmite: 30 weight percent).

The obtained composition was dried in a similar way to Example 1, and thereafter, was mixed at 10 rpm and 230°C for 1 minute by a laboplasto mill made by Toyo Seiki Seisaku-sho, Ltd., and was taken out.
With regard to this resin composition, a weight-average molecular weight according to the GPC analysis condition -1 was 12.6×10⁴, a number-average molecular weight according thereto was 1.3×10⁴, and haze was 9.1 %. Moreover, with regard to a strand with a diameter of 3 mm and a length of 10 mm, which was molded at 260°C by the vacuum trace mixer, a coefficient of linear thermal expansion was 37 ppm/K, and an as content was 24 weight %. In accordance with the analysis by the TEM, the boehmite in the resin composition was favorably dispersed as primary particles into the polycarbonate.

### <Example 3>

12.10 g of the boehmite sol of the cyclohexanone, which was obtained by Reference example 4, and 9.19 g of dimethoxymethylphenylsilane which was as the silylation reagent and made by Gelest, Inc. were used, and were heated and agitated at a bath temperature of 60°C and an internal temperature of approximately 55°C for 0.5 hour. Thereafter, an obtained mixture was cooled and left. By a similar method to that of Example 1 except for the above-described procedure, the boehmite was treated.

The next day, in a similar way to Example 1, cyclohexanone was added to the mixture, and was reheated.
To such cyclohexanone sol of the boehmite treated with dimethoxymethylphenylsilane, cyclohexanone was added so that the boehmite concentration could become 5 weight percent, and the cyclohexanone sol was subjected to the ultrasonic dispersion for 2 hours by the ultrasonic dispersion machine. Thereafter, 20.00 g of this sol and 26.82 g of a 8.7 weight percent dichloromethane solution of polycarbonate (7030A) similar to that used in Example 1 were mixed together, and dichloromethane was evaporated therefrom, whereby cyclohexanone sol of the silylation-treated boehmite/polycarbonate was obtained.

This sol was added little by little to heptane of which capacity was 6.5 times the weight of this sol, and unreacted dimethoxymethylphenylsilane and a self-condensate thereof were removed. Thereafter, after a solid content was filtered and the solvent was evaporated therefrom, in a similar way to Example 1, the solid content was dried, was then subjected to trace mixing, and was extruded.
With regard to the obtained silylation-treated boehmite/polycarbonate resin composition (content of the silylation-treated boehmite: 30 weight percent), a weight-average molecular weight according to the GPC analysis condition -1 was 4.37×10⁴, and a number-average molecular weight according thereto was 0.72×10⁴. Moreover, haze was 8.4%, and an ash content was 23%. In accordance with the analysis by the TEM, the boehmite in the resin composition was favorably dispersed as primary particles into the polycarbonate.

### <Example 4>

In place of methoxytrimethylsilane, 9.75 g of triethylsilane made by Shin-Etsu Chemical Co., Ltd. was used, and with regard to a reaction temperature, the bath temperature was set at 105°C, and the internal temperature was set at 92°C, and a reaction time was set at 4.5 hours. By a similar method to that of Example 1 except for the above-described conditions, the boehmite was subjected to the silylation treatment. Cyclohexanone sol of the boehmite subjected to the triethylsilane treatment was adjusted to the concentration of 5 weight percent in a similar way to Example 1. Thereafter, in a similar way to Example 1, 16.06 g of this sol and 21.41 g of the 8.7 weight percent dichloromethane solution of the polycarbonate (7030A) were mixed together, the solvent was evaporated, and a silylation-treated boehmite/polycarbonate resin composition was obtained, and then was similarly dried, and was thereafter subjected to the trace mixing and was extruded.

With regard to this resin composition (content of silylation-treated boehmite: 30 weight percent), a weight-average molecular weight according to the GPC analysis condition -1 was 4.01×10⁴, a number-average molecular weight according thereto was 0.87×10⁴, and haze was 9.6%. Moreover, an ash content was 21%. In accordance with the analysis by the TEM, the boehmite in the resin composition was favorably dispersed as primary particles into the polycarbonate.

### <Example 5>

10 g of the boehmite sol of cyclohexanone, which was obtained by Reference example 4, and in place of methoxymethylphenylsilane, 5.09 g of methylphenylsilane made by Sigma-Aldrich Co. as the silylation reagent were prepared, and with regard to the reaction temperature, the bath temperature was set at 105°C, and the internal temperature was set at approximately 92°C. In a similar way to Example 3 except for the above-described conditions, the boehmite was subjected to the silylation treatment. For the boehmite subjected to methylphenylsilane, a reheating operation similar to that of Example 3 was performed, and thereafter, cyclohexanone was finally added thereto, and a concentration thereof was adjusted to 4.2 weight percent. Then, in a similar way to Example 1, 19.03 g of this sol and 21.49 g of the 8.7 weight percent dichloromethane solution of the polycarbonate (7030A) were mixed together, dichloromethane was evaporated therefrom, and similar operations to those of Example 3 were performed, whereby the silylation-treated boehmite/polycarbonate resin composition was deposited in heptane. In a similar way to Example 1, this obtained mixture was dried, and was thereafter subjected to the trace mixing and was extruded.

With regard to this resin composition (content of silylation-treated boehmite: 30 weight percent), a weight-average molecular weight according to the GPC analysis condition -1 was 4.75×10⁴, and a number-average molecular weight according thereto was 1.2×10⁴. Moreover, haze was 31.4%, and an ash content was 23%. In accordance with the analysis by the TEM, the boehmite in the resin composition was favorably dispersed as primary particles into the polycarbonate. However, spots where the boehmite was partially somewhat aggregated were observed.

In place of methoxytrimethylsilane made by Tokyo Chemical Industry Co., Ltd., 11.09 g of acetoxytrimethylsilane was used as the silylation reagent, and was heated and agitated at a bath temperature of 105°C and an internal temperature of approximately 92°C for 0.5 hour. By a similar method to that of Example 1 except for the above-described procedure, the boehmite was silylated.

The boehmite subjected to the acetoxytrimethylsilane treatment was subjected to a reheating operation in a similar way to Example 1, and thereafter, cyclohexanone was finally added thereto, whereby this sol was adjusted to a concentration of 5 weight percent. Then, in a similar way to Example 1, 16.04 g of this sol and 21.46 g of the 8.7 weight percent dichloromethane solution of the polycarbonate (7030A) were mixed together, the solvent was evaporated, and the silylation-treated boehmite/polycarbonate resin composition (content of silylation-treated boehmite: 30 weight percent) was obtained. In a similar way to Example 1, this composition was dried, and was thereafter subjected to the trace mixing and was extruded.

With regard to this resin composition, a weight-average molecular weight according to the GPC analysis condition -1 was 3.35×10⁴, and a number-average molecular weight according thereto was 0.76×10⁴. Moreover, an ash content was 23%. In accordance with the analysis by the TEM, the boehmite in the resin composition was favorably dispersed as primary particles into the polycarbonate.
By the HAADF-STEM and the STEM-EDX, this composite was analyzed by irradiating an electron beam narrowed to 2 nm or less as a half width onto the surfaces of the boehmite in the resin composition. Then, on the surfaces of the boehmite, Si existed with a concentration of 2 to 10 mol% with respect to Al. The Si component was not detected on spots where the boehmite did not exist.

### <Example 7>

In a scale in which Example 6 was multiplied by 15, the boehmite was subjected to the methoxytrimethylsilane treatment. Thereafter, in a similar way to Example 6, the boehmite was subjected to the acetoxytrimethylsilane treatment, and was thereafter stored under the room temperature by the next day, and 750 ml of cyclohexanone was thereafter added thereto, and was evaporated until a weight of residual sol became approximately 300 g. In the case where the precipitation of the boehmite was observed during this treatment, the boehmite was appropriately dispersed by the ultrasonic dispersion machine.

To the cyclohexanone sol of the boehmite subjected to the acetoxytrimethylsilane treatment, cyclohexanone was added so that the boehmite concentration could become 5 weight percent, and the boehmite was subjected to the ultrasonic dispersion for 2 hours by the ultrasonic dispersion machine. Thereafter, in a similar way to Example 1, 300 g of this sol and 402 g of the 8.7 weight percent dichloromethane solution of the polycarbonate (7030A) were mixed together, and the solvent was evaporated, whereby the silylation-treated boehmite/polycarbonate resin composition (content of silylation-treated boehmite: 30 weight percent) was obtained.

This obtained sol was dried in a similar way to Example 1, and was thereafter mixed at 230°C and 40 rpm for 3 minutes by the same laboplasto mill as that used in Example 2, and was taken out.
With regard to this resin composition, a weight-average molecular weight according to the GPC analysis condition -1 was 4.89×10⁴ , and a number-average molecular weight according thereto was 1.3×10⁴. Moreover, haze was 5.0%, and in a columnar molded body with a bottom surface diameter of 5 mm and a length of 10 mm, a coefficient of linear thermal expansion was 48 ppm/K, an ash content was 23 weight percent, and tensile strength was 71 MPa (tensile strain: 3.0%). In accordance with the analysis by the TEM, the boehmite in the resin composition was favorably dispersed as primary particles into the polycarbonate.

### <Example 8>

In place of acetoxytrimethylsilane, 7.40 g of diacetoxydimethylsilane made by Tokyo Chemical Industry Co., Ltd. was used as the silylation reagent. In a similar way to Example 6 except for the above-described condition, 5 weight percent sol of the boehmite subjected to the diacetoxydimethylsilane treatment was obtained. In a similar way to Example 3, 16.09 g of this sol was mixed with 21.46 g of the 8.7 weight percent dichloromethane solution of the polycarbonate (7030A), dichloromethane was evaporated, and thereafter, the silylation-treated boehmite/polycarbonate resin composition (content of silylation-treated boehmite: 30 weight percent) was precipitated in heptane. In a similar way to Example 1, this precipitated composition was dried, and was thereafter subjected to the trace mixing and was extruded.

With regard to this resin composition, a weight-average molecular weight according to the GPC analysis condition -1 was 4.18×10⁴, and a number-average molecular weight according thereto was 1.2×10⁴. Moreover, haze was 36.2%, and an ash content was 22 weight percent. With regard to the boehmite in the resin composition, the primary particles were likely to be aggregated by every 10 pieces. However, were dispersed in the polycarbonate relatively favorably.

### <Example 9>

12.06 g of the boehmite sol of cyclohexanone, which was obtained by Reference example 4, was used, and 9.00 g of trimethylsilanol made by Shin-Etsu Chemical Co., Ltd. was used as the silylation reagent. By a similar method to that of Example 6 except for the above-described conditions, 5 weight percent sol of the boehmite subjected to the trimethylsilanol treatment was obtained. 20.16 g of this sol was mixed with 26.39 g of the 8.7 weight percent dichloromethane solution of the polycarbonate (7030A), the solvent was evaporated, and the silylation-treated boehmite/polycarbonate resin (content of silylation-treated boehmite: 30 weight percent) was obtained. In a similar way to Example 1, this obtained composition was dried, and thereafter, was subjected to the trace mixing and was extruded.

With regard to this resin composition, a weight-average molecular weight according to the GPC analysis condition -1 was 3.70×10⁴ , and a number-average molecular weight according thereto was 0.92×10⁴. Moreover, haze was 4.1%, and an ash content was 24 weight percent.

### <Example 10>

In a similar way to Reference example 4, in place of p-toluenesulfonic acid monohydrate, benzyl phophonic acid made by Wako Pure Chemical Industries, Ltd. was used, whereby cyclohexanone sol with a boehmite concentration of 7.9 weight percent was prepared.
Silylation treatment was performed in a similar way to Example 6 by using 15.25 g of this sol and 13.22 g of methoxytrimethylsilane made by Tokyo Chemical Industry Co., Ltd., and the boehmite was dispersed for 30 minutes by the ultrasonic dispersion machine, and thereafter, acetoxytrimethylsilane and acetic acid in the raw materials were evaporated. Moreover, 60 g of cyclohexanone was added to treated sol, and cyclohexanone was evaporated until a weight of the sol became approximately 15g.
The cyclohexanone sol of the boehmite subjected to the acetoxytrimethylsilane treatment was added with cyclohexanone so that the boehmite concentration thereof could become 4.5 weight percent, and was thereafter subjected to the ultrasonic dispersion for 2 ours by the ultrasonic dispersion machine. Thereafter, 22.12 g of the cyclohexanone sol of the boehmite and 26.81 g of the 8.7 weight percent dichloromethane solution of the polycarbonate (7030A) were mixed together, the solvent was evaporated, and the silylation-treated boehmite/polycarbonate resin composition (content of silylation-treated boehmite: 30 weight percent) was obtained. In a similar way to Example 1, this obtained composition was dried, and thereafter, was subjected to the trace mixing and extruded.

With regard to this composition, an ash content was 24 weight percent, a weight-average molecular weight according to the GPC analysis condition -1 was 1.74×10⁴, and a number-average molecular weight according thereto was 0.45×10⁴. Moreover, haze was 31.4%. In accordance with the analysis by the TEM, the boehmite in the resin composition was favorably dispersed as primary particles into the polycarbonate.

### <Example 11>

The hydrosol of the boehmite, which was obtained in Reference example 2, was substituted by methanol by the ultrafiltration described in Reference example 5, whereby a methanol dispersion liquid of the boehmite was formed. This dispersion was condensed under reduced pressure, whereby methanol sol (6 weight percent) of the boehmite was formed. Under nitrogen, in a four-neck flask of 1 L, which includes the mechanical stirrer made of Teflon (registered trademark), 317 g of the methanol sol (6 weight percent) of the boehmite, which was subjected to the ultrasonic dispersion treatment, 247 g of methoxytrimethylsilane made by Shin-Etsu Chemical Co., Ltd., and 24.1 g of dimethoxymethylphenylsilane made by Gelest, Inc. were mixed together, were subjected to the ultrasonic dispersion, and thereafter, were heated and agitated at a bath temperature of 80°C for 4.5 hours.
Two-thirds of the above-described sol was taken out, 380 g of dioxane was added thereto, and the sol was dispersed by the ultrasonic dispersion machine. Thereafter, methoxytrimethylsilane and methanol in the raw materials were evaporated. Moreover, 1010 ml of dioxane was added to the residual sol, and dioxane was evaporated until a residual amount of the sol became approximately 470 g.
The above-described operations were repeated, and totally 1.4 kg of dioxane sol containing dioxane sol of the silylation-treated boehmite (concentration of boehmite: 2.7 weight percent) was obtained.
To this sol, 70.1 g of a dioxane solution containing 10 weight percent dodecylbenzenesulfonic acid (made by Tokyo Chemical Industry Co., Ltd.) was added, followed by agitation. Dioxane was added to a resultant in a ratio of totally 20 ml with respect to 10 g as a weight of the sol, and the same capacity of dioxane as that of dioxane added thereto was evaporated. In such a way, 1.3 kg of dioxane sol of the silylation-treated boehmite, which contained dodecylbenzenesulfonic acid, was prepared (concentration of boehmite: 2.7 weight percent).
Ultrasonic waves were applied to 540 g of this sol for 1 hour. Thereafter, this sol was mixed with 545 g of the 8.7 weight percent dichloromethane solution of polycarbonate synthesized by a similar method to that of Reference example 7. In this polycarbonate, a weight-average molecular weight according to the GPC analysis condition -2 was 7.9×10⁴, and a number-average molecular weight according thereto was 3.4×10⁴. Thereafter, the solvent was evaporated, and a resultant was subjected to an extraction operation by 4L of heptane. Thereafter, heptane was evaporated, whereby the silylation-treated boehmite/polycarbonate resin composition (content of silylation-treated boehmite: 24 weight percent) was obtained.
This obtained sol was dried in a similar way to Example 1, was thereafter mixed at 250°C and 40 rpm for 5 minutes by the same laboplasto mill as that used in Example 2, and was taken out.

With regard to this resin composition, an ash content was 20%, a weight-average molecular weight according to the GPC analysis condition -2 was 5.90×10⁴, a number-average molecular weight according thereto was 0.93×10⁴ , and haze was 3.6%.
Moreover, a coefficient of linear thermal expansion of a columnar molded body with a bottom surface diameter of 5 mm and a length of 10 mm, which was obtained by molding this resin composition at 270°C by the trace mixer, was 59 ppm/K, and tensile strength measured for a micro dumbbell produced by the small injection molding method was 60 MPa (tensile strain: 37%). In accordance with the analysis by the TEM, the boehmite in the resin composition was favorably dispersed as primary particles into the polycarbonate.

### <Example 12>

The silylation reaction for the boehmite was performed by the following method by using a fixed-bed vapor flow reactor including a cylindrical glass reactor with a diameter of 20 mm, which is made of Pyrex.
Onto a layer of a 2 g of the boehmite containing dodecylbenzenesulfonic acid, which was obtained by Reference example 6, a mixed solution of methoxytrimethylsilane made by Shin-Etsu Chemical Co., Ltd. and 0.85 g of dimethoxydimethylsilane made by Tokyo Chemical Industry Co., Ltd. was fed at a speed of 0.1 ml/min for 2 hours under a nitrogen flow. In such a way, the boehmite was silylated. A temperature of a boehmite phase at this time was 60 to 80°C. An excessive silylation reagent was permeated through the boehmite layer, and was thereafter cooled and condensed to be thereby converted into a liquid. In such a way, the excessive silylation reagent was separated from the boehmite. Subsequently, 2 g of the boehmite subjected to the silylation treatment was formed into tetrahydrofuran (THF) sol in which a boehmite concentration was 3 weight percent. After application of ultrasonic waves for 1.5 hour, the formed THF sol was mixed with 53.6 g of the 8.7 weight percent dichloromethane solution of the polycarbonate 7030A, the solvent was evaporated by an evaporator, and the silylated boehmite/polycarbonate resin composition (content of silylated boehmite: 30 weight percent) was obtained.
This obtained composition was vacuum-dried in a similar way to Example 1. Thereafter, the composition was subjected to the trace mixing in a similar way to Example 1 except that the mixing temperature was set at 270°C, that a warming temperature was set at 2 minutes, and that the mixing was performed at 20 rpm for 5 minutes.

With regard to this resin composition, an ash content was 24%, a weight-average molecular weight according to the GPC analysis condition -2 was 2.42×10⁴ , a number-average molecular weight according thereto was 0.46×10⁴ , and haze was 7.6%.
Moreover, a coefficient of linear thermal expansion of a columnar molded body with a bottom surface diameter of 5 mm and a length of 10 mm, which was obtained by molding this resin composition at 270°C by the trace mixer, was 50 ppm/K.

### <Example 13>

By using the same permeable membrane as that used in Reference example 6, the boehmite hydrosol obtained by Reference example 2 was purified, and dodecylbenzenesulfonic acid was not used. By a similar method to that of Reference example 5 except for the above-described point, freeze-dried boehmite was obtained.
71 kg of methanol and 0.7 kg of water were mixed to 4.5 kg of this boehmite, whereby methanol sol of 6 weight percent boehmite was prepared. 76 kg of this sol was used, and was silylated in a similar way to Example 11 by using 59 kg of methoxytrimethylsilane and 5.7 kg of dimethoxymethylphenylsilane.
After reaction of the above, 80 kg of THF was added to a silylated resultant, and unreacted methoxytrimethylsilane was evaporated.
THF was added to the above-described sol gradually until a total amount thereof reached 326 kg, and the same amount of solvent as that of the added THF was evaporated. Thereafter, finally, THF sol in which the concentration of the boehmite was 3 weight percent was obtained.
After cooling the THF sol, 8.6 kg of a THF solution containing dodecylbenzenesulfonic acid as a product of Tokyo Chemical Industry Co., Ltd. by 10 weight percent was added thereto, thereafter, 120 kg of THF was added thereto, and thereafter, 120 kg of THF was evaporated therefrom, whereby approximately totally 160 kg of THF sol of the silylated boehmite (concentration of boehmite: 3 weight percent) was obtained.
83 kg of this sol and 48 kg of a 12 weight percent methylene chloride of the same polycarbonate as that used in Example 11 were added together, and thereafter, the solvent was evaporated one more time. Solids thus obtained were subjected to an extraction operation at the room temperature by heptane of which amount was five times that of the obtained solids. Then, the solvent was removed one more time, and such residual solids were dried at 120°C. In such a way, the silylation-treated boehmite/polycarbonate resin composition (content of silylated boehmite: 30 weight percent).

With regard to this resin composition, a weight-average molecular weight according to the GPC analysis condition -2 was 2.77×10⁴, and a number-average molecular weight was 0.55×10⁴. Moreover, haze was 2.3%.
Moreover, in accordance with the analysis by the TEM, the boehmite in the resin composition was favorably dispersed as primary particles into the polycarbonate.
This was formed into pellets by using a biaxial extruder (deep groove, same rotation direction) under operation conditions where the number of screw revolutions was 200 rpm, a resin temperature was 260 to 290°C, an ejection amount was 15 kg/hour, and a vent vacuum degree was 0.1 MPa. An ash content of the pellets thus obtained was 23 weight percent.
By the above-described injection molding, a dumbbell specimen was created by using these pellets.
With regard to the obtained dumbbell specimen, a coefficient of linear thermal expansion was measured by the above-described slicing method, and a modulus of elasticity in tension was measured by the above-described ISO method (resin temperature setting of molder was set at 210°C). Then, the coefficient of linear thermal expansion was 35 ppm/K, and the modulus of elasticity in tension was 8.8 GPa. A value obtained by dividing this value of the modulus of elasticity in tension by the numeric value of the ash content (23 weight percent) was 0.38. Moreover, tensile strength was 65 MPa (tensile strain: 1.1 %).

### <Example 14>

In Example 13, blending of the raw materials was adjusted so that the concentration of ash content could become 20 weight percent, and the resin temperature setting of the molder was set at 240°C. Except for the above, similar operations to those of Example 13 were performed.
With regard to this resin composition, a weight-average molecular weight according to the GPC analysis condition -2 was 3.03×10⁴, and a number-average molecular weight according thereto was 0.60×10⁴. Moreover, haze was 3.6%. A coefficient of linear thermal expansion of the resin composition was 36 ppm/K.
In accordance with the analysis by the TEM, the boehmite in the resin composition was favorably dispersed as primary particles into the polycarbonate.
As a result of a tensile test, a modulus of elasticity in tension of this molded body was 9.7 GPa, and a value obtained by dividing this value of the modulus of elasticity in tension by the numeric value of the ash content (actual measured value: 19 weight percent) was 0.51. Moreover, tensile strength of the molded body was 60 MPa (tensile strain: 0.84%).

### <Comparative example 1>

The boehmite sol of cyclohexanone, which was obtained by Reference example 4, was used by 10 g, 4.98 g of 3-aminopropyltrimethoxysilane made by Tokyo Chemical Industry Co., Ltd. was used as the silylation reagent, and with regard to the reaction temperature, the bath temperature was set at 105°C, and the internal temperature was set at approximately 92°C. In a similar way to Example 3 except for the above-described conditions, the boehmite was silylated. 20.00 g of 5 weight percent sol of this boehmite and 26.82 g of the 8.7 weight percent dichloromethane solution of the same polycarbonate (7030A) as the used in Example 1 were mixed together. Thereafter, dichloromethane was evaporated, and cyclohexanone sol of the silylation-treated boehmite/polycarbonate was obtained. In a similar way to Example 3, this sol was deposited in heptane, and the silylation-treated boehmite/polycarbonate resin composition was obtained (content of silylation-treated boehmite: 30 weight percent).
After being dried, this obtained composition was not be able to be subjected to the trace mixing or extruded in a similar way to Example 1. Therefore, this composition was taken out as it was.

With regard to this resin composition, an ash content was 28 weight percent, a weight-average molecular weight according to the GPC analysis condition -1 was 0.073×10⁴ , and a number-average molecular weight according thereto was 0.059×10⁴. Moreover, a sample of haze was not able to be molded. In the resin compositions, there were portions where the boehmite existed and portions where the boehmite did not exist, and a constitution of the resin composition was nonuniform.

### <Comparative example 2>

By a similar method to that of Comparative example 1 except that 12.27 g of 3-aminopropylmethoxydimethylsilane made by Fluorochem Ltd. was used as the silylation reagent, the silylated-boehmite/polycarbonate resin composition was obtained (content of silylation-treated boehmite: 30 weight percent). In a similar way to Example 1, this obtained composition was dried, and thereafter, was subjected to the trace mixing and was extruded. With regard to this resin composition, an ash content was 23 weight percent, a weight-average molecular weight according to the GPC analysis condition -1 was 0.28×10⁴, and a number-average molecular weight according thereto was 0.12×10⁴. Moreover, a sample of haze was not able to be molded. The boehmite in the resin composition was aggregated.

### <Comparative example 3>

3.24 g of the cyclohexanone sol of the boehmite, which was obtained by Reference example 4, was used, 1.76 g of trimethoxyphenylsilane made by Chisso Corporation was used as the silylation reagent, the number of reheating times was set at one time, and 15.17 g of the 8.7 weight percent dichloromethane solution of the polycarbonate was used. By a similar method to that of Comparative example 1, the silylated boehmite/polycarbonate resin composition was obtained (content of silylation-treated boehmite: 20 weight percent). This obtained composition was dried in a similar way to Example 1. Thereafter, this composition was kept warm at 240°C for 5 minutes by the same trace mixer as that of Example 1, and thereafter was mixed at 15 rpm for 5 minutes at the same temperature, followed by extrusion. With regard to this resin composition, an ash content was 23 weight percent, a weight-average molecular weight according to the GPC analysis condition -1 was 4.33×10⁴, and a number-average molecular weight according thereto was 1.0×10⁴. Moreover, haze was 76.6%. The boehmite in the resin composition was aggregated. Moreover, aggregates of the self-condensate of the silylation reagent were observed.

### <Comparative example 4>

In a scale 38 times that of Comparative example 3, the silylated boehmite/polycarbonate resin composition was obtained. This obtained composition was dried in a similar way to Example 1, and thereafter, was mixed at 230°C and 40 rpm for 3 minutes by the same laboplasto mill as that used in Example 2, and was taken out.
With regard to this resin composition, an ash content was 25 weight percent, a weight-average molecular weight according to the GPC analysis condition -1 was 6.76×10⁴ , and a number-average molecular weight according thereto was 1.1×10⁴. Moreover, haze was 82%, and a thermal expansion coefficient of a columnar molded body with a bottom surface diameter of 5 mm and a length of 10 mm was 75 ppm/K.
The boehmite in the resin composition was aggregated.

### <Comparative example 5>

The concentration of the boehmite sol of cyclohexanone, which was obtained by Reference example 4, was adjusted to 5 weight percent without performing the silylation treatment for the boehmite. 386 g of an adjustment resultant was dispersed for 2 hours by the ultrasonic dispersion machine, and thereafter, was mixed with 450 g of a 10 weight percent dichloromethane solution of the polycarbonate. Thereafter, the solvent was evaporated, and the boehmite/polycarbonate resin composition was obtained (content of boehmite that is not subjected to silylation treatment: 30 weight percent). This obtained composition was dried overnight in a similar way to Example 1, and thereafter, was mixed at 240°C and 40 rpm for 10 minutes by the same laboplasto mill as that used in Example 2, and was taken out.
With regard to this resin composition, an ash content was 25 weight percent, a weight-average molecular weight according to the GPC analysis condition -1 was 1.41×10⁴, and a number-average molecular weight according thereto was 0.48×**1**0⁴. Moreover, haze was 5.0%, and a thermal expansion coefficient of a columnar molded body with a bottom surface diameter of 5 mm and a length of 10 mm was 47 ppm/K. In accordance with the analysis by the TEM, the boehmite in the resin composition was favorably dispersed as primary particles into the polycarbonate.

### <Comparative example 6>

1.5 g of the powder boehmite synthesized by the method of Reference example 2 and 13.5 g of tetrahydrofuran were mixed together, whereby 15 g of a 10 weight percent tetrahydrofuran solution of the boehmite was prepared, and was subjected to the ultrasonic treatment for 2 hours. Thereafter, the solution concerned was mixed with 40.2 g of the 8.7 weight percent dichloromethane solution of the same polycarbonate (7030A) as that used in Example 1. Thereafter, the solvent was evaporated, and the boehmite/polycarbonate resin composition was obtained (content of boehmite that is not silylated or does not contain dispersant: 30 weight percent). This obtained composition was dried in a similar way to Example 1, and thereafter, was kept warm at 260 °C for 5 minutes by the same trace mixer as that of Example 1, and thereafter, was mixed at 15 rpm for 5 minutes at the same temperature, followed by extrusion.
With regard to this resin composition, an ash content was 25 weight percent, a weight-average molecular weight according to the GPC analysis condition -1 was 1.44×10⁴, and a number-average molecular weight according thereto was 0.27×10⁴, and haze was 85.6%.
The boehmite in the resin composition were aggregated.

Results of the surface elemental analysis for the surface-coated aluminum oxide nanoparticles or the aluminum oxide nanoparticles, results of the elemental analysis in the composition of the polycarbonate resin and the surface-coated aluminum oxide nanoparticles or the aluminum oxide nanoparticles, measurement results of the physical properties (toughness test, tensile test), the contents of the ash contained in the resin composition, the weight-average molecular weights and number-average molecular weights of the polycarbonate resin components in the resin compositions, the hazes and the coefficient of linear thermal expansions in Examples 1 to 14 and Comparative examples 1 to 6 were summarized in Tables 1 and 2.

**[Table 1]**

| | | Dispersant *1 | Silylation reagent *2 | Surface elemental analysis (XPS) for aluminum oxide nanoparticles | | | | | | | Elemental analysis for resin composition | | | | | |
|---|---|---|---|---|---|---|---|---|---|---|---|---|---|---|---|---|
| | | | | Si/Al ratio (mol%) | Content (atm%) | | | | | | Si/Al ratio (mol%) | Content (% by weight) | | | | |
| | | | | | N | S(SH)*³ | F | C1 | Br | 1 | | N | F | Cl | Br | 1 |
| Example | 1 | PTS | Me_{;}SiOMe | 3.1 | 0.2 | 0.04 | 0.1 | 0.1 | 0.1 | <0.1 | 0.72 | | | | | |
| | 2 | PTS | Me₃SiOMe | - | | | | | | | 0.2 | 0.011 | <0.010 | 0.0130 | <0.010 | <0.020 |
| | 3 | PTS | PhMeSi(OMe)₂ | 7.4 | 0 | 0.11 | 0.0 | 0.0 | 0.0 | 0.0 | 3.0 | | | | | |
| | 4 | PTS | Et₃SiH | 4.2 | 0.0 | 0.05 | 0.0 | 0.0 | 0.0 | <0.1 | 4.0 | | | | | |
| | 5 | PTS | PhMeSiH₂ | 0.8 | 0.1 | 0.07 | 0.0 | <0.1 | 0.1 | 0.0 | 1.7 | | | | | |
| | 6 | PTS | Me₃SiOac | 9.7 | 0.1 | 0.03 | 0.0 | 0.0 | 0.0 | <0.1 | 1.0 | | | | | |
| | 7 | PTS | Me₃SiOac | - | | | | | | | 0.4 | | | | | |
| | 8 | PTS | Me₂Si(Oac)₂ | 4.7 | 0.0 | 0.06 | 0.0 | <0.1 | 0.0 | 0.0 | 2.0 | | | | | |
| | 9 | PTS | Me₃SiOH | 0.7 | 0.1 | 0.13 | 0.0 | 0.1 | 0.0 | 0.0 | 0.3 | | | | | |
| | 10 | BPA | Me₃SiOac | 3.7 | 0.2 | 0.0 | 0.0 | 0.0 | 0.0 | <0.1 | 0.3 | | | | | |
| | 11 | DBS | Me₃SiOMe + PhMeSi(OMe)₂ | 3.6 | 0.0 | 0.16 | 0.0 | 0.0 | <0.1 | 0.0 | 11.9 | | | | | |
| | 12 | DBS | Me₃SiOMe + Me₂Si(OMe)₂ | 0.8 | <0.1 | 0.15 | 0.0 | <0.1 | 0.0 | 0.0 | 2.2 | | | | | |
| | 13 | DBS | Me₃SiOMe + PhMeSi(OMe)₂ | 20.5 | 0.0 | 0.24 | 0.0 | 0.0 | 0.0 | 0.0 | 4.8 | | | | | |
| | 14 | DBS | Me₃SiOMe + PhMeSi(OMe)₂ | - | | | | | | | 4.5 | | | | | |
| Comparative example | 1 | PTS | NH₂PrSi(OMe)₃ | 3850 | 6.5 | 0.03 | 0.05 | 0.04 | 0.0 | 0.0 | 109.8 | 3.31 | <0.010 | <0.010 | <0.010 | <0.020 |
| | 2 | PTS | NH₂PrMe₂SiOMe | 18 | 2.7 | 0.05 | 0.0 | 0.09 | 0.0 | 0.0 | 10.9 | 0.86 | | | | |
| | 3 | PTS | PhSi(OMe)₃ | 43.7 | 0.0 | 0.07 | 0.0 | 0.0 | 0.0 | 0.0 | 85.6 | | | | | |
| | 4 | PTS | PhSi(OMe)₃ | - | | | | | | | 90.9 | | | | | |
| | 5 | PTS | - | 0.0 | <0.1 | 0.08 | 0.2 | 0.1 | <0.1 | <0.1 | 0 | 0.0060 | <0.010 | 0.0120 | <0.010 | <0.020 |
| | 6 | - | - | 0.0 | 0.1 | 0.00 | 0.0 | 0.1 | 0.2 | 0.0 | 0 | | | | | |

| | | | | | | | | | | | | | | | | |
|---|---|---|---|---|---|---|---|---|---|---|---|---|---|---|---|---|
| *1 PTS: Paratoluenesulfonic acid PBA: Benzylphosphonic acid DBS: Dodecylbenzenesulfonic acid *2 Me₃SiOMe: Methoxytrimethylsilane PhMeSi(OMe)₂: dimethoxymethylphenylsilane Et₃SiH: Triethylsilane PhMeSiH₂: Methylphenylsilane Me₃SiOac: Acetoxytrimethylsilane Me₂Si(Oac)₂: Diacetoxydimethylsilane Me₃SiOH: Trimethylsilanol NH₂PrSi(OMe)₃: 3-Aminopropyltrimethoxysilane NH₂PrMe₂SiOMe: 3-Aminopropylmethoxydimethylsilane PhSi(OMe)₃: Trimethoxyphenylsilane Me₂Si(OMe)₂: Dimethoxydimethylsilane *3 S derived from SH | | | | | | | | | | | | | | | | |

**[Table 2]**

| | | Quality of toughness | Tensile test | | | | Ash content (% by weight) | Molecular weight *6 | Haze (%) | Coefficient of linear thermal expansion (ppm/K) |
|---|---|---|---|---|---|---|---|---|---|---|
| | | | Tensile strength (MPa) | Tensile strain (%) | Modulus of elasticity in tension (GPa) | Modulus of elasticity in tension / ash content (Gpa/% by weight) | | | | |
| Example | 1 | ○ | | | | | 24 | 4.08 / 0.94 | 6.6 | |
| | 2 | ○ | | | | | 24 | 12.6 / 1.3 | 9.1 | 37 |
| | 3 | ○ | | | | | 23 | 3.30/0.72 | 8.4 | |
| | 4 | ○ | | | | | 21 | 4.01 / 0.87 | 9.6 | |
| | 5 | ○ | | | | | 23 | 4.75 / 1.2 | 31.4 | |
| | 6 | ○ | | | | | 23 | 3.35 / 0.76 | | |
| | 7 | ○ | 71 | 3.0 | | | 23 | 4.89 / 1.3 | 5.0 | 48 |
| | 8 | ○ | | | | | 22 | 4.18 / 1.2 | 36.2 | |
| | 9 | ○ | | | | | 24 | 3.70/0.92 | 4.1 | |
| | 10 | ○ | | | | | 24 | 1.74 / 0.45 | 31.4 | |
| | 11 | ○ | 60 | 37 | | | 20 | 5.90/0.93 | 3.6 | 59 |
| | 12 | ○ | | | | | 24 | 2.42/0.46 | 7.6 | 50 |
| | 13 | ○ | 65 | 1.1 | 8.8 | 0.38 | 23 | 2.77 / 0.55 | 2.3 | 35 |
| | 14 | ○ | 60 | 0.84 | 9.7 | 0.51 | 19 | 3.03/0.60 | 3.6 | 36 |
| Comparative example | 1 | × | | | | | 28 | 0.073 / 0.059 | unmoldable | |
| | 2 | × | | | | | 23 | 0.28 / 0.12 | unmoldable | |
| | 3 | ○ | | | | | 23 | 4.33 / 1.0 | 76.7 | |
| | 4 | ○ | | | | | 25 | 6.76/1.1 | 82.0 | 75 |
| | 5 | × | | | | | 25 | 1.41 / 0.48 | 5.0 | 47 |
| | 6 | × | | | | | 25 | 1.44 / 0.27 | 85.6 | |

| | | | | | | | | | | |
|---|---|---|---|---|---|---|---|---|---|---|
| *6: Weight-average molecular weight (x 10⁴) / Number-average molecular weight (x 10⁴) | | | | | | | | | | |

From Tables 1 and 2, it is understood that, in the resin composition including the surface-coated aluminum oxide nanoparticles of the present invention, the decrease of the molecular weight of the polycarbonate resin is small, and the resin composition is excellent in mechanical characteristics, transparency, dimensional stability and thermal stability.

The present invention has been described in detail by using the specific modes. However, it is obvious for those skilled in the art that a variety of alterations are possible without departing from the spirit of the present invention.
Note that this application is based on a Japanese patent application (Japanese Patent Application No. 2006-212261) filed on August 3, 2006, the entire contents of which are incorporated herein by reference.

## Claims

1. Surface-coated aluminum oxide nanoparticles of which surfaces are coated with a dispersant and a silylation reagent,
wherein contents (atm%) of nitrogen atoms, thiol-derived sulfur atoms, and halogen atoms in the surface-coated aluminum oxide nanoparticles are individually 2 or less when a monochromated Al-Ka ray is irradiated onto a sample surface by using an X-ray photoelectron spectroscope, and a surface element composition is calculated from an obtained photoelectron peak area, and
a concentration (mol%) of silicon atoms with respect to aluminum atoms is 0.05 to 30 when the monochromated Al-Ka ray is irradiated onto the sample surface by using the X-ray photoelectron spectroscope, and the surface element composition is calculated from obtained photoelectron peak areas of Al2p and Si2s.

2. A surface-coated aluminum oxide nanoparticles according to claim 1,
wherein the dispersant is one type or two or more types selected from the group consisting of organic sulfonic acid, organic phosphoric acid and derivatives of these.

3. A surface-coated aluminum oxide nanoparticles according to claim 1,
wherein the dispersant comprises an organic acid with at least carbon number of 8 or more.

4. A surface-coated aluminum oxide nanoparticles according to claim 1,
wherein residues of the silylation reagent have alkyl groups and/or aryl groups.

5. Organic sol comprising a surface-coated aluminum oxide nanoparticles according to claim 1.

6. A resin composition comprising:
a surface-coated aluminum oxide nanoparticles according to claim 1; and
polycarbonate resin.

7. A resin composition comprising: surface-coated aluminum oxide nanoparticles of which surfaces are coated with a dispersant and a silylation reagent; and polycarbonate resin, wherein haze measured by a method of JIS K7105 is 40% or less.

8. A resin composition according to claim 7, wherein a concentration (mol%) of silicon atoms derived from the silylation reagent with respect to aluminum atoms in the resin composition is 0.05 to 30.

9. A resin composition according to claim 7, wherein the dispersant comprises organic acid with at least carbon number of 8 or more.

10. A production method of surface-coated aluminum oxide nanoparticles, comprising: treating aluminum oxide nanoparticles with a silylation reagent,
wherein the silylation reagent is a monofunctional silylation reagent and/or a bifunctional silylation reagent, and atomic ratios of nitrogen atoms, sulfur atoms and halogen atoms with respect to silicon atoms in the silylation reagent are individually 0.05 or less.

11. A production method of surface-coated aluminum oxide nanoparticles according to claim 10, wherein the silylation reagent is a silylation reagent represented by a following general formula (1) and/or a silylation reagent represented by a following general formula (2):
R¹R²R³SiX (1)
R⁴R⁵SiX¹X² (2)
where, in the formulas (1) and (2), R¹ to R⁵ represent alkyl groups or aryl groups independently of one another, and X, X¹ and X² represent hydrogen atoms, hydrolytic substituents or hydroxyl groups independently of one another.

12. A production method of surface-coated aluminum oxide nanoparticles according to claim 11, wherein X, X¹ and X² are hydrogen atoms, acetoxy groups, alkoxy groups with a carbon number of 1 to 4, or hydroxyl groups independently of one another.

13. A production method of surface-coated aluminum oxide nanoparticles according to claim 11, wherein the silylation reagent is represented by the general formula (1).

14. A production method of surface-coated aluminum oxide nanoparticles according to claim 10, wherein an usage amount of the silylation reagent with respect to 1 weight part of the aluminum oxide nanoparticles is within a range of 0.001 to 50 weight parts.

15. A production method of surface-coated aluminum oxide nanoparticles according to claim 10, wherein the treating the aluminum oxide nanoparticles with the silylation reagent is performed in a vapor phase.

16. A production method of surface-coated aluminum oxide nanoparticles according to claim 10, further comprising: treating the aluminum oxide nanoparticles with a dispersant.

17. A production method of surface-coated aluminum oxide nanoparticles according to claim 10, wherein a dispersant comprises an organic acid with at least carbon number of 8 or more.

18. A production method of an organic sol, comprising: treating aluminum oxide nanoparticles with a silylation reagent, wherein the silylation reagent is a monofunctional silylation reagent and/or a bifunctional silylation reagent, and atomic ratios of nitrogen atoms, sulfur atoms and halogen atoms with respect to silicon atoms in the silylation reagent are individually 0.05 or less.

19. A production method of an organic sol according to claim 18, wherein the silylation reagent is a silylation reagent represented by a following general formula (1) and/or a silylation reagent represented by a following general formula (2):
R¹R²R³SiX (1)
R⁴R⁵SiX¹X² (2)
where, in the formulas (1) and (2), R¹ to R⁵ represent alkyl groups or aryl groups independently of one another, and X, X¹ and X² represent hydrogen atoms, hydrolytic substituents or hydroxyl groups independently of one another.

20. A production method of an organic sol according to claim 19, wherein X, X¹ and X² are hydrogen atoms, acetoxy groups, alkoxy groups with a carbon number of 1 to 4, or hydroxyl groups independently of one another.

21. A production method of an organic sol according to claim 19, wherein the silylation reagent is represented by the general formula (1).

22. A production method of an organic sol according to claim 18, wherein a usage amount of the silylation reagent with respect to 1 weight part of the aluminum oxide nanoparticles is within a range of 0.001 to 50 weight parts.

23. A production method of an organic sol according to claim 18, wherein the treating aluminum oxide nanoparticles with the silylation reagent is performed in a vapor phase.

24. A production method of an organic sol according to claim 18, further comprising: treating the aluminum oxide nanoparticles with a dispersant.

25. A production method of an organic sol according to claim 18, wherein the dispersant comprises an organic acid with at least carbon number of 8 or more.

26. A molded body comprising: a resin composition according to claim 6.

27. A molded body comprising: a resin composition according to claim 7.

28. A molded body of a polycarbonate resin composition containing aluminum oxide nanoparticles, wherein haze is 5% or less, and a modulus of elasticity in tension is 5 GPa or more.

29. A molded body of a polycarbonate resin composition containing aluminum oxide nanoparticles, wherein haze is 5% or less, and a coefficient of linear thermal expansion is 45 ppm/K or less.
